# EUROPEAN PATENT APPLICATION

(11) **EP 3 905 162 A2**
(43) Date of publication of application: **03.11.2021**
(21) Application number: 19903453.9
(22) Date of filing: 24.12.2019
(51) Int. Cl.: G06Q 10/10, G06Q 50/10, G01C 21/34

(54) **SCHEDULE MANAGEMENT SERVICE SYSTEM AND METHOD**

(30) Priority: 26.12.2018 KR 20180169542
(71) Applicant: Lee, Chung Jong, Gangwon-do 26248 (KR)
(72) Inventor: Lee, Chung Jong, Gangwon-do 26248 (KR)
(74) Representative: Gulde & Partner
(86) International application number: PCT/KR2019/018369
(87) International publication number: WO 2020/138903

(57) **Abstract**

The present disclosure relates to a schedule management service system which takes spatial movements into consideration and has a schedule recommendation function.

According to the present disclosure, based on the movement method information input from a user terminal, appointment time information and appointment place information included in input schedule information, and the user's immediately preceding schedule and immediately subsequent schedule registered in a schedule information database 11, it is determined whether it is possible to move between schedules, and if not possible, a schedule conflict signal is transmitted to the user terminal.

## Description

### BACKGROUND OF THE DISCLOSURE

### Field of the disclosure

The present disclosure relates to a schedule management service system and a method which takes spatial movements into consideration and has a schedule recommendation function and, more particularly, to a schedule management service system and a method which checks, based on appointment time information and appointment place information included in schedule information entered into a terminal by a user, whether appointment places may be visited during time intervals between appointment times of the schedule information considering movement method information entered by the user; if not possible, transmits an instruction message to the user terminal; and provides recommended schedules which may be used for a time zone without a schedule to the user terminal.

### Related Art

Currently, mobile phones, smartphones, PDAs, and so on are provided and used as terminals for mobile communication. These mobile terminals provide not only an alarm function, an electronic calculator, a phone book, a schedule calendar, and various game functions but also a voice recording function, a photographing function, a video recording function, and a location tracking function for the convenience of users.

As described above, mobile terminals play an important role in various personal activities, and as various new functions are added to the mobile terminals, their usefulness is continuously expanding.

A schedule calendar or a diary app installed and used in the mobile terminal allows users to select a desired date and register a schedule or an anniversary in advance. The schedule calendar or diary app may notify the user of the registered schedule or anniversary in advance by providing an alarm at the corresponding date and time. The user may modify or delete registered schedules or add a new schedule using the schedule calendar or diary app, thereby managing personal schedules conveniently.

As one example of prior art related to the schedule management system and method, the patent 1 below proposed a "schedule management service system and a method", and the present inventor proposed the patent 2 below, entitled "Cyber or real community scheduler system and scheduling method in cyber or real community".
(Patent 1) Korea registered patent No. 10-0619371 (Publication date: Sep. 11, 2006)
(Patent 2) Korea registered patent No. 10-1218217 (Publication date: Mar. 15, 2013)

### SUMMARY

The patent 1 proposed a schedule management system and a method which register a schedule by receiving a user's schedule input in a wired/wireless network environment and checking a conflict between the received schedule and a pre-registered schedule based on time information and location information; and provide an instruction message for the registered schedule by taking into consideration both of the time and location information of the registered schedule and current location information of the user.

The patent 2 proposed a virtual or real community scheduler system and a scheduling method in a virtual or real community capable of automatically processing meetings in a virtual or real community established on an SNS site according to a predetermined scheduling algorithm including the top priority and the second priority.

According to the patent 1, it is possible to register a schedule by receiving a user's schedule input and checking a conflict between the received schedule and a pre-registered schedule based on time information and location information. According to the patent 2, a meeting schedule in a community to which the user belongs may be determined automatically.

However, none of the disclosed technologies provides job information or service information satisfying particular conditions to a user terminal by converting the job or service information into a form of schedule information, registers a schedule selected by the user selectively into a schedule information database as schedule information of the user, and provides, to the user terminal, recommended schedules which may be used for a time zone without a schedule.

To solve the problems above, the present disclosure provides a schedule management service system and a method capable of (1) determining whether scheduled events may be kept up with by using movement method information input from a user terminal, appointment time information and appointment place information included in the input schedule information, and an immediately preceding schedule and an immediately subsequent schedule of the user registered in a schedule information database and transmitting a schedule conflict signal to the user terminal if the scheduled events may not be kept up with; (2) selectively registering the shared schedule information of a community to which the user belongs to the schedule information database as the user's schedule information and sharing a common schedule determined from automatic implementation of scheduling of meetings in the community; (3) receiving work conditions from the user terminal, converting job information that satisfies the conditions into a schedule information format and providing the converted job information to the user terminal, and selectively registering a schedule selected by the user as the user's schedule information in the schedule information database; (4) receiving condition information of an interested service from the user terminal, converting service information that satisfies the condition into a schedule information format and providing the converted service information to the user terminal, and selectively registering a schedule selected by the user as the user's schedule information in the schedule information database; (5) registering and managing each of the followers who wish to share a leader's schedule information as one of active supporters, friendly supporters, critical supporters, and criticizers and sharing the leader's schedule information among the followers or all users who are not followers of the leader according to the public attribute given to the schedule information by the leader; and (6) accessing a basic quality database matching target job information input from the user terminal, obtaining basic qualities needed for achieving the target job, determining the highest priority basic quality to be achieved in consideration of the user's age, extracting those related to the highest priority basic quality among service information registered to a service database and personal schedule information registered to a personal schedule information database, and providing, to the user terminal, recommended schedules obtained by converting service information and personal schedule information of which the service provision time or the schedule progress time included in the extracted service information and personal schedule information overlaps with the user's time zone without a schedule into a schedule information format.

To achieve the object described above, a schedule management service system according to the present disclosure comprises a main schedule management server receiving movement method information and schedule information of a user from at least one user terminal, registering the received information to a schedule information database and managing the registered information, and transmitting alarm information and registered schedule information to the at least one user terminal according to a predetermined rule, wherein the main schedule management server comprises a member management unit receiving user's information from the at least one user terminal, registering the received information to a member information database and managing the registered information, and performing user member authentication according to a login request; a first movement time calculation unit calculating required movement time between schedules by using the movement method information, appointment time information and appointment place information included in the schedule information received from the at least one user terminal, and appointment time information and appointment place information included in the user's schedule information registered to the schedule information database; and a schedule check and registration unit checking a conflict with the user's schedule information registered to the schedule information database at the time of schedule registration and registering the schedule information received from the at least one user terminal selectively to the schedule information database; and wherein the main schedule management server transmits a schedule registration confirmation signal to the at least one user terminal after schedule registration or a schedule conflict signal to the at least one user terminal according to a processing result from the schedule check and registration unit.

A schedule management service method of a schedule management service system according to the present disclosure, wherein the schedule management service system comprises a main schedule management service system receiving movement method information and schedule information of a user from at least one user terminal, registering the received information to a schedule information database and managing the registered information, and transmitting alarm information and registered schedule information to the at least one user terminal according to a predetermined rule, wherein the main schedule management server comprises a member management unit receiving user's information from the at least one user terminal, registering the received information to a member information database and managing the registered information, and performing user member authentication according to a login request; a first movement time calculation unit calculating required movement time between schedules by using the movement method information, appointment time information and appointment place information included in the schedule information received from the at least one user terminal, and appointment time information and appointment place information included in the user's schedule information registered to the schedule information database; and a schedule check and registration unit checking a conflict with the user's schedule information registered to the schedule information database at the time of schedule registration and registering the schedule information received from the at least one user terminal selectively to the schedule information database, the method comprising receiving user's information from the at least one user terminal, registering the received information to a member information database and managing the registered information, and performing user member authentication according to a login request; calculating required movement time between schedules by using the movement method information, appointment time information and appointment place information included in the schedule information received from the at least one user terminal, and appointment time information and appointment place information included in the user's schedule information registered to the schedule information database; and checking a conflict with the user's schedule information registered to the schedule information database and transmitting a schedule registration confirmation signal to the at least one user terminal after registering the input scheduling information to the schedule information database or a schedule conflict signal to the at least one user terminal.

### ADVANTAGEOUS EFFECTS

A schedule management service system and method according to the present disclosure provides an effect of determining whether scheduled events may be kept up with by using movement method information input from a user terminal, appointment time information and appointment place information included in the input schedule information, and an immediately preceding schedule and an immediately subsequent schedule of the user registered in a schedule information database; and transmitting a schedule conflict signal to the user terminal if the scheduled events may not be kept up with.

Also, the schedule management service system and method according to the present disclosure provides an effect of selectively registering the shared schedule information of a community to which the user belongs to the schedule information database as the user's schedule information and sharing a common schedule determined from automatic implementation of scheduling of meetings in the community.

Also, the schedule management service system and method according to the present disclosure provides an effect of receiving work conditions from the user terminal, converting job information that satisfies the conditions into a schedule information format and providing the converted job information to the user terminal, and selectively registering a schedule selected by the user as the user's schedule information in the schedule information database.

Also, the schedule management service system and method according to the present disclosure provides an effect of receiving condition information of an interested service from the user terminal, converting service information that satisfies the condition into a schedule information format and providing the converted service information to the user terminal, and selectively registering a schedule selected by the user as the user's schedule information in the schedule information database.

Also, the schedule management service system and method according to the present disclosure provides an effect of registering and managing each of the followers who wish to share a leader's schedule information as one of active supporters, friendly supporters, critical supporters, and criticizers and sharing the leader's schedule information among the followers or all users who are not followers of the leader according to the public attribute given to the schedule information by the leader.

Also, the schedule management service system and method according to the present disclosure provides an effect of accessing a basic quality database matching target job information input from the user terminal, obtaining basic qualities needed for achieving the target job, determining the highest priority basic quality to be achieved in consideration of the user's age, extracting those related to the highest priority basic quality among service information registered to a service database and personal schedule information registered to a personal schedule information database, and providing, to the user terminal, recommended schedules obtained by converting service information and personal schedule information of which the service provision time or the schedule progress time included in the extracted service information and personal schedule information overlaps with the user's time zone without a schedule into a schedule information format.

### BRIEF DESCRIPTION OF THE DRAWINGS

FIG. 1 illustrates an overall structure of a schedule management service system according to the present disclosure.
FIG. 2 is a block diagram illustrating a schedule management service system according to one embodiment of the present disclosure.
FIG. 3 is a flow diagram illustrating a schedule management service system according to one embodiment of the present disclosure.
FIG. 4 is a flow diagram illustrating a schedule management service system according to one embodiment of the present disclosure in more detail.
FIG. 5 is a block diagram illustrating a schedule management service system according to another embodiment of the present disclosure.
FIG. 6 is a block diagram illustrating a schedule management service system according to yet another embodiment of the present disclosure.
FIG. 7 is a block diagram illustrating a schedule management service system according to still another embodiment of the present disclosure.
FIG. 8 is a block diagram illustrating a schedule management service system according to yet still another embodiment of the present disclosure.
FIG. 9 is a block diagram illustrating a schedule management service system according to still yet another embodiment of the present disclosure.

### DESCRIPTION OF EXEMPLARY EMBODIMENTS

A schedule management service system according to one aspect of the present disclosure comprises a main schedule management server receiving movement method information and schedule information of a user from at least one user terminal, registering the received information to a schedule information database and managing the registered information, and transmitting alarm information and registered schedule information to the at least one user terminal according to a predetermined rule, wherein the main schedule management server comprises a member management unit receiving user's information from the at least one user terminal, registering the received information to a member information database and managing the registered information, and performing user member authentication according to a login request; a first movement time calculation unit calculating required movement time between schedules by using the movement method information, appointment time information and appointment place information included in the schedule information received from the at least one user terminal, and appointment time information and appointment place information included in the user's schedule information registered to the schedule information database; and a schedule check and registration unit checking a conflict with the user's schedule information registered to the schedule information database at the time of schedule registration and registering the schedule information received from the at least one user terminal selectively to the schedule information database; and wherein the main schedule management server transmits a schedule registration confirmation signal to the at least one user terminal after schedule registration or a schedule conflict signal to the at least one user terminal according to a processing result from the schedule check and registration unit.

In what follows, various embodiments of the present disclosure will be described in detail with reference to appended drawings. In describing an embodiment of the present disclosure, if it is determined that a detailed description of a related art or structure incorporated herein unnecessarily obscure the gist of the present disclosure, detailed descriptions thereof will be omitted. The terms described below are defined considering the functions of the present disclosure, which may vary depending on a user or an operator's intention or practice. Therefore, the terms should be defined based on their context throughout the present disclosure.

The preferred embodiments of a schedule management service system and method according to the present disclosure are described below with reference to appended drawings. However, the present disclosure is not limited to the embodiments disclosed below but may be implemented in various other forms; rather, the present embodiments are provided to make the present disclosure complete and inform those skilled in the art clearly of the technical scope of the present disclosure.

Various embodiments of the present disclosure may be implemented by software (for example, a program) including commands stored in a machine (for example, a computer)-readable storage medium. The machine is an apparatus capable of calling stored commands from the storage medium and operating according to the commands called, which may include an electronic device (for example, a server) according to the disclosed embodiments. The command may include code generated or executed by a compiler or an interpreter. The machine-readable storage medium may be provided in the form of a non-transitory storage medium. Here, the term 'non-transitory' only indicates that the storage medium does not include a signal and is tangible but does not distinguish whether data are stored semi-permanently or temporarily.

According to one embodiment, the method according to various embodiments according to the present disclosure may be provided by being included in a computer program product. The computer program product may be traded among sellers and buyers as a commodity. The computer program product may be distributed in the form of a machine-readable storage medium (for example, a Compact Disc Read Only Memory (CD-ROM)) or online through an application store (for example, Play Store™). In the case of online distribution, at least part of the computer program product may be at least stored temporarily or generated temporarily in a server of the manufacturer, a server of the application store, or a storage medium such as a memory of a relay server.

Each of the constituting elements (for example, a module or a program) according to various embodiments of the present disclosure may be composed of a single or multiple entities; and part of the corresponding sub-elements described above may be omitted, or another sub-element may be further included in the various embodiments. Alternatively or additionally, part of the constituting elements (for example, a module or a program) may be integrated into a single entity, and the functions executed by the respective constituting elements prior to the integration may be performed in the same manner or in a similar manner. The operations executed by a module, a program, or another constituting element according to the various embodiments may be performed in a sequential, parallel, or heuristic manner; or at least part of the operations may be performed in a different order or omitted, or another operation may be added to the operations.

In what follows, preferred embodiments of the present disclosure will be described in detail with reference to appended drawings, and it should be understood that the present disclosure is not confined to or limited by the present embodiments.

In what follows, an overall structure of a schedule management service system according to the present disclosure will be described.

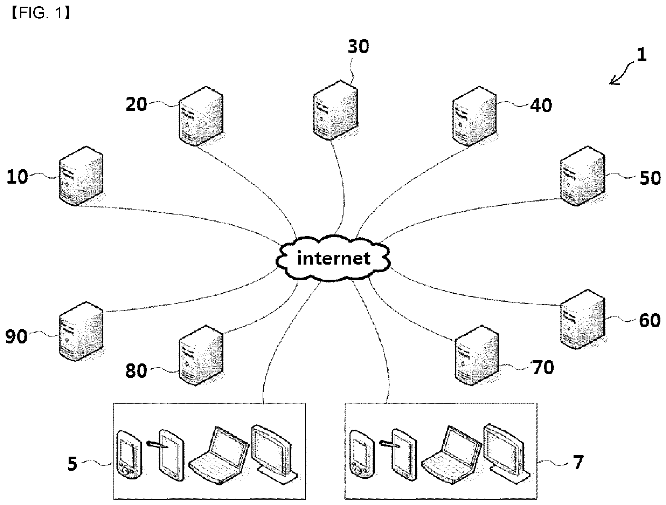

FIG. 1 illustrates an overall structure of a schedule management service system according to the present disclosure.

A schedule management service system 1 according to the present disclosure may be constructed by comprising a main schedule management server 10, a group schedule management server 20, a work schedule management server 30, a service schedule management server 40, an open schedule management server 50, a person-of-interest management server 60, an event schedule recommendation server 70, an artificial intelligence server 80, and a wish schedule management server 90.

The main schedule management server 10 is a server that receives movement method information and schedule information of a user from at least one user terminal 5, registers the received information to the schedule information database 11, manages the registered information in the schedule information database 11, and transmits alarm information and registered schedule information to the at least one user terminal 5 according to a predetermined rule. The main schedule management server 10 is a server providing the most basic schedule management service within the schedule management service system 1 according to the present disclosure, which provides various useful, additional services to the user through interaction with other servers.

The group schedule management server 20 receives user identification information from at least one user terminal 5, transmits shared schedule information of a group to which the user is subscribed to the schedule management server 10, checks whether the shared schedule information of the subscribed group conflicts with the user's schedule information registered in the schedule information database 11, and requests the main schedule management server 10 to selectively register the shared schedule information of the subscribed group to the schedule information database 11 as the user's schedule information.

The work schedule management server 30 receives job information from at least one requester terminal 7; registers and manages the received job information by classifying the received job information according to categories, search words, areas, work execution times, and salaries; converts the job information satisfying conditions due to a request from at least one user terminal 5 into a schedule information form; and provides the converted job information to the at least one user terminal 5.

The structures and functions of the main schedule management server 10, the group schedule management server 20, the work schedule management server 30, the service schedule management server 40, the open schedule management server 50, the person-of-interest management server 60, the event schedule recommendation server 70, the artificial intelligence server 80, and the wish schedule management server 90 will be described in detail while the following embodiments are described.

The user terminal 5, the requester terminal 7, and each server may be connected to a network. Here, the network includes wireless and wired networks, which may be, for example, a short-range communication network (Bluetooth, WiFi direct, Infrared data association (IrDA), and so on) or a long-range communication network (a cellular network, the Internet, or a computer network (LAN or WAN)).

The user terminal 5 and the requester terminal 7 may transmit and receive various information through a network and display necessary information on a display. The terminals may be implemented by a computer comprising a CPU, a display unit, a memory unit, and an input device, which may further include a wired/wireless communication system module, a speaker, a key button, and so on.

Here, the computer may include a handheld wireless communication device such as a Personal Digital Assistant (PDA), an International Mobile Telecommunication (IMT)-2000 terminal, a Code Division Multiple Access (CDMA)-2000 terminal, a W-Code Division Multiple Access (W-CDMA) terminal, a Wireless Broadband Internet (Wibro) terminal, a smartphone, a smartpad, and a Tablet PC.

When a user wants to use a schedule management service provided by the schedule management service system 1 according to the present disclosure, the user may use the schedule management service by installing an app or a program distributed by the service provider in a mobile device carried by the user or a user terminal 5 such as a PC.

The apps or programs may be provided in the form of a single full app or program. However, suppose the user wants to use an additional function after installing only the basic app or program. It is then preferable to additionally install an app or a program providing the corresponding function and use the app or the program properly.

For example, when the user wants to use only the basic schedule management service provided by the main schedule management server 10, the user only needs to install and use a main schedule management app or program.

And, when the user wants to use additional functions provided by the group schedule management server 20, the work schedule management server 30, the service schedule management server 40, and the open schedule management server 50, the user only needs to install and use apps or programs for the additional functions that allow the user to use the additional functions provided by the individual servers through interaction with the main schedule management server 10.

In what follows, the structure of a schedule management service system according to one embodiment of the present disclosure will be described.

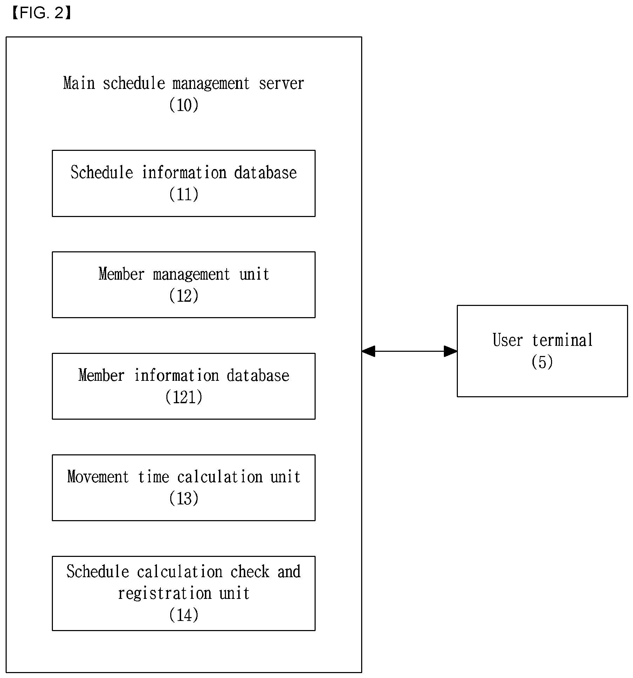

FIG. 2 is a block diagram illustrating a schedule management service system according to one embodiment of the present disclosure.

In one embodiment, the schedule management service system 1 according to the present disclosure may include the main schedule management server 10.

The main schedule management server 10 receives movement method information and schedule information of a user from at least one user terminal 5, registers the received information to the schedule information database 11 and manages the registered information, and transmits alarm information and registered schedule information to the at least one user terminal 5 according to a predetermined rule, wherein the main schedule management server 10 may comprise a member management unit 12, a movement time calculation unit 13, and a schedule check and registration unit 14.

The user may select movement method information from among a car, public transportation, a bicycle, and walking for each period and input the selected information to the user terminal 5. Accordingly, when the movement time calculation unit 13 calculates the required movement time, the movement time calculation unit 13 may use the input movement method information for a period containing appointment times included in the input schedule information.

However, such movement method information may be set as a default value provided by the main schedule management server 10. For example, if the user installs a main schedule management app or program and then selects and inputs a car as the default value of the movement method information, the movement method information is basically set to the car for the entire periods; if the user selects and inputs another movement method information such as public transportation, a bicycle, or walking for a specific period, the changed movement method information is used only when the required movement time is calculated for the corresponding period.

The member management unit 12 receives user information from at least one user terminal 5, registers the received information to the member information database 121, manages the registered information, and performs user member authentication according to a login request.

The movement time calculation unit 13 calculates required movement time between schedules by using the movement method information, appointment time information and appointment place information included in the schedule information received from the user terminal 5, and appointment time information and appointment place information included in the user's schedule information registered to the schedule information database 11.

To this end, the movement time calculation unit 13 extracts an immediately preceding schedule and an immediately subsequent schedule from the schedule information database 11 based on the appointment time information included in the schedule information input from the user terminal 5, converts appointment place information included in the input schedule information, appointment place information of the immediately preceding schedule, and appointment place information of the immediately subsequent schedule into coordinate data on an electronic map, inputs the converted coordinate data into an electronic map engine together with the movement method information, and calculates a first required movement time required to move between the appointment place of the immediately preceding schedule and the appointment place included in the input schedule information and a second required movement time required between the appointment place included in the input schedule information and the appointment place of the immediately subsequent schedule.

Here, as described above, the user may set the default value of the movement method information in advance in an environment setting mode provided by the main schedule management server 10 or select and input another movement method information for a specific period. While inputting schedule information, the user may input the movement method information for the corresponding schedule together.

When calculating the required movement time, the movement time calculation unit 13 may be linked with a separate traffic information system. For example, if the schedule information input from the user terminal 5 is today's schedule information, the movement time calculation unit 13 may receive navigation data from the separate traffic information system and use the received navigation data to calculate the required movement time. At this time, the navigation data may include "road information from an appointment place of an immediately preceding schedule to an appointment place included in the input schedule information," "road information from the appointment place included in the input schedule information to an appointment place of an immediately subsequent schedule," and current traffic condition information.

The schedule check and registration unit 14 checks a conflict between the schedule information input from the user terminal 5 and the user's schedule information registered to the schedule information database 11 and registers the input schedule information selectively to the schedule information database 11.

To this end, the schedule check and registration unit 14 compares a time interval (first time interval) between the end time of an immediately preceding schedule and an appointment time of the schedule information input from the user terminal 5 with a first required movement time, compares a time interval (second time interval) between the end time of the schedule information input from the user terminal 5 and an appointment time of an immediately subsequent schedule with a second required movement time, and selectively registers the schedule information input from the user terminal 5 to the schedule information database 11 according to whether a conflict occurs.

The main schedule management server 10 may transmit a schedule registration confirmation signal to the user terminal 5 after schedule registration or a schedule conflict signal to the user terminal 5 according to a processing result from the schedule check and registration unit 14.

When the user wants to use a schedule management service provided by the main schedule management server 10, the user may use the schedule management service by installing and using a main schedule management app or program.

As described above, when the user inputs new schedule information, the schedule management service system 1 including the main schedule management server 10 checks a conflict between the new schedule information and the user's schedule information registered to the schedule information database 11, selectively registers the new schedule information to the schedule information database 11. When it is not possible to move between schedules, the schedule management service system 1 transmits a schedule conflict signal to the user terminal 5 to which the user has logged in so that the user may immediately know the occurrence of a conflict with the already registered schedule information at the time of inputting new schedule information and the user may easily register new schedule information to the schedule information database 11 without having to check whether there is a conflict between schedules separately.

In what follows, a schedule management service method of a schedule management service system according to one embodiment of the present disclosure will be described.

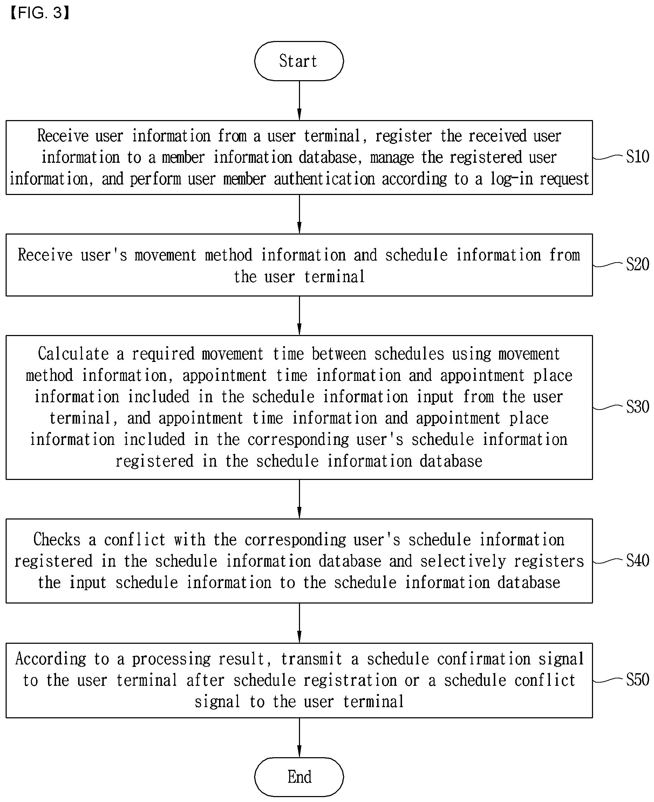

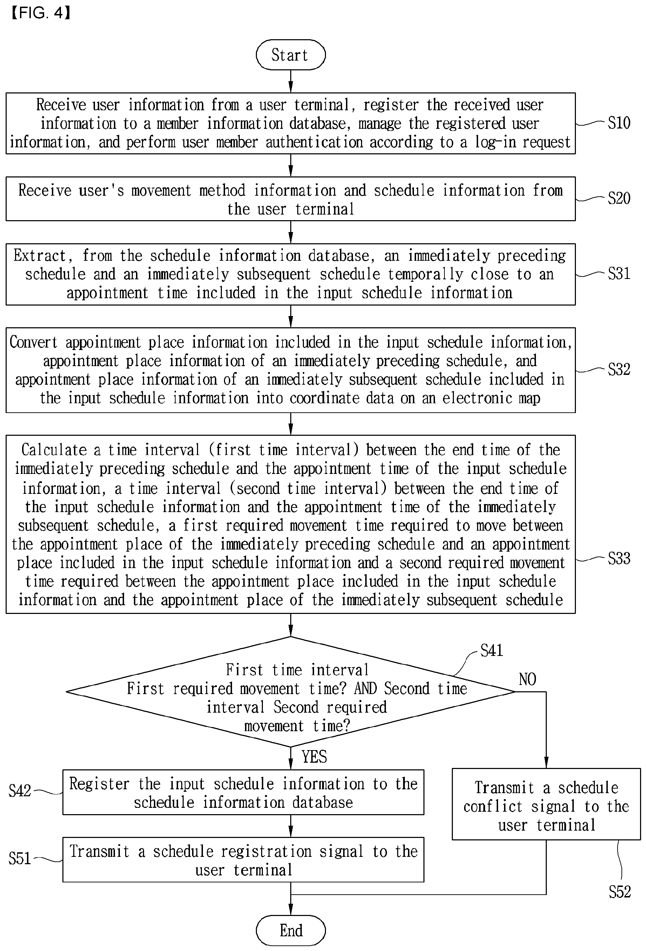

FIG. 3 is a flow diagram illustrating a schedule management service system according to one embodiment of the present disclosure, and FIG. 4 is a flow diagram illustrating a schedule management service system according to one embodiment of the present disclosure in more detail.

Referring to FIG. 3, in one embodiment, the schedule management service system 1 according to the present disclosure may receive user information from the user terminal 5, register the received user information to the schedule information database 11 and manage the registered information, and perform user member authentication according to a login request at the step of S10. For example, the member management unit 12 receives user information from the user terminal 5, registers the received information to the schedule information database 11, manages the registered information, and performs user member authentication according to a login request.

In one embodiment, the schedule management service system 1 according to the present disclosure may receive the user's movement method information and schedule information from the user terminal 5 at the step of S20. As described above, the user may select movement method information from among a car, public transportation, a bicycle, and walking for each period, may set the movement method information as the default value provided by the main schedule management server 10, and may input the movement method information for the corresponding schedule together while inputting schedule information.

In one embodiment, the schedule management service system 1 according to the present disclosure may calculate required movement time between schedules by using the movement method information, appointment time information and appointment place information included in the schedule information received from the user terminal 5, and appointment time information and appointment place information included in the user's schedule information registered to the schedule information database 11 at the step of S30.

For example, referring to FIG. 4, the movement time calculation unit 13 may extract an immediately preceding schedule and an immediately subsequent schedule from the schedule information database 11 based on the appointment time information included in the input schedule information at the step of S31.

And the movement time calculation unit 13 may convert appointment place information included in the input schedule information, appointment place information of an immediately preceding schedule, and appointment place information of an immediately subsequent schedule into coordinate data on an electronic map at the step of S32.

Afterwards, at the step of S33, the movement time calculation unit 13 may input the three converted coordinate data on the electronic map into an electronic map engine together with the corresponding movement method information; and calculate a first required movement time required to move between the appointment place of the immediately preceding schedule and the appointment place included in the input schedule information and a second required movement time required between the appointment place included in the input schedule information and the appointment place of the immediately subsequent schedule.

Referring to FIG. 3, in one embodiment, at the step of S40, the schedule management service system 1 according to the present disclosure may check a conflict between the user's schedule information registered to the schedule information database 11 and the input schedule information and register the input schedule information selectively to the schedule information database 11.

For example, referring to FIG. 4, at the step of S41, the schedule check and registration unit 14 may determine occurrence of a conflict by comparing a time interval (first time interval) between the end time of an immediately preceding schedule and an appointment time of the input schedule information with a first required movement time and comparing a time interval (second time interval) between the end time of the input schedule information and an appointment time of an immediately subsequent schedule with a second required movement time. In other words, if the first time interval is larger than or equal to the first required movement time and the second time interval is larger than or equal to the second required movement time, it is determined that a conflict does not occur, otherwise it is determined that a conflict occurs.

At the step of S42, if the input schedule information does not conflict with an immediately preceding schedule and an immediately subsequent schedule, the schedule check and registration unit 14 may register the input schedule information to the schedule information database 11.

Referring to FIG. 3, in one embodiment, at the step of S50, the schedule management service system 1 according to the present disclosure may transmit a schedule registration confirmation signal to the user terminal 5 after schedule registration or a schedule conflict signal to the user terminal 5 according to a processing result from the schedule check and registration unit 14.

For example, referring to FIG. 4, at the step of S51, the main schedule management server 10 may transmit a schedule registration confirmation signal to the user terminal 5 when the input schedule information does not conflict with an immediately preceding schedule and an immediately subsequent schedule, and the schedule check and registration unit 14 registers the input schedule information to the schedule information database 11.

On the other hand, at the step of S52, the main schedule management server 10 may transmit a schedule conflict signal to the user terminal 5 when the input schedule information conflicts with an immediately preceding schedule or an immediately subsequent schedule, and the schedule check and registration unit 14 does not register the input schedule information to the schedule information database 11.

In what follows, the structure of a schedule management service system according to another embodiment of the present disclosure will be described.

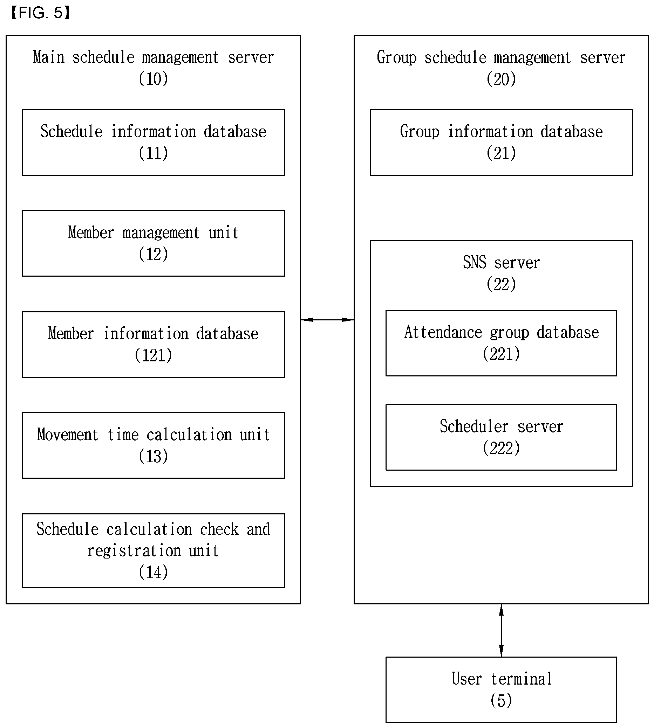

FIG. 5 is a block diagram illustrating a schedule management service system according to another embodiment of the present disclosure.

In one embodiment, the schedule management service system 1 according to the present embodiment may include a main schedule management server 10 and a group schedule management server 20.

Since the main schedule management server 10 is the same as the one described above, it will not be described again.

The group schedule management server 20 receives user identification information from at least one user terminal 5, transmits shared schedule information of a group to which the user is subscribed to the main schedule management server 10, checks whether the shared schedule information of the subscribed group conflicts with the user's schedule information registered in the schedule information database 11, and requests the main schedule management server 10 to selectively register the shared schedule information of the subscribed group to the schedule information database 11 as the user's schedule information, which may include a group information database 21 and an SNS server 22.

The group schedule management server 20 automatically reflects a group's shared schedule to the user's schedule by selectively registering the shared schedule of the group (community) to which the user is subscribed to the schedule information database 11 as the user's schedule information.

The group schedule management server 20 also provides a function of managing SNS sites, communities established on the SNS sites, and members of the respective communities.

In particular, the group schedule management server 20 not only provides a commonly known social networking service (SNS) but also provides a function of determining a meeting schedule by applying a meeting scheduling algorithm to the members registered for each community (group).

The group information database 21 provides a function of identifying a plurality of communities established on the SNS site and storing and managing information of the members subscribed to the respective communities (groups) and shared schedule (for example, meeting schedule) information of each community (group).

The SNS server 22 provides a social networking service to the members of each community (group) based on the member information of the community (group) stored in the group information database 21 and provides a function of determining a meeting schedule by applying a new scheduling technique.

To apply a new scheduling technique for determining a meeting schedule, the SNS server 22 may include an attendance group database 221 and a scheduler server 222.

The attendance group database 221 performs the function of registering each member for one of an mandatory attendance group, an optional attendance group, and an unrelated attendance group based on the member information of the community stored in the group information database 21.

According to one embodiment, when people registered as members of a community established on an SNS site are classified into hosts, organizers, and general members, the attendance group database 221 may register organizers who are founders of the corresponding community (where the organizers may include a plurality of members referred to by the titles of executive, manager, and so on) among the community members for the mandatory attendance group.

The attendance group database 221 may register the organizer (one person), who is the president of the corresponding community, for the mandatory attendance group.

For the mandatory attendance group, the number of votes required for the resolution of a meeting may be specified. The number of votes is determined according to the quorum, which means the smallest number of members among the members of the corresponding community that have to be present at the meeting for approving the resolution; the organizer, who is the actual operator of the corresponding community, may determine the number of votes and the quorum.

Registration for the mandatory attendance group is made for those members who have to attend a meeting when the number of votes, the quorum, and the number of optional members are met, and thus, the meeting is called to order.

Whether or not the mandatory attendance group meets the number of votes may be determined by counting the number of members who have decided to attend the meeting among the members registered for the mandatory attendance group by using a scheduling algorithm to be described later.

According to one embodiment, the optional attendance group comprises members who are not obliged to attend a meeting but encouraged to attend the meeting; and a quorum requirement may be set for the mandatory attendance group and the optional attendance group. As described above, the quorum refers to the smallest number of members among the members of the corresponding community that have to be present at a meeting for approving a resolution in the meeting. Therefore, if the number of members who decide to attend a meeting among the mandatory attendance group is more than or equal to the number of votes and if a sum of the number of members who decide to attend the meeting among the mandatory attendance group and the number of members who decide to attend the meeting among the optional attendance group is greater than or equal to the quorum, the meeting is confirmed to be held.

According to one embodiment, the unrelated attendance group comprises those members whose attendance at a meeting is not essential but are allowed to attend the meeting according to their own.

This requirement for the number of optional members may be determined by the organizer, who is an actual operator of the corresponding community, and the value for the number of optional members may be set to 0.

When the attendance group database 221 registers the members of the corresponding community for one of the mandatory attendance group, the optional attendance group, and the unrelated attendance group, the scheduler server 222 determines a meeting schedule by applying a meeting scheduling algorithm to the mandatory attendance group, the optional attendance group, and the unrelated attendance group.

The scheduler server 222 gives priorities to the attendance groups registered in the attendance group database 221 in order of the mandatory attendance group, the optional attendance group, and the unrelated attendance group, determines whether the number of members who have decided to attend a meeting satisfies a predetermined condition for each attendance group according to the priority, and if the predetermined condition is satisfied, determines a meeting schedule by setting the date selected by the largest number of members among a plurality of meeting dates notified to the members of the corresponding community as the meeting date.

According to one embodiment, when a host announces meeting plan information including a plurality of meeting dates, places, and purposes to the members of the corresponding community, the scheduler server 222 determines whether the number of members who have decided to attend the meeting among the mandatory attendance group is greater than or equal to the number of votes. If so, the scheduler server 222 determines whether a sum of the number of members who have decided to attend the meeting among the mandatory attendance group and the number of members who have decided to attend the meeting among the optional attendance group is greater than or equal to the quorum. When the sum is greater than or equal to the quorum, the scheduler server 222 determines in turn whether the number of members who have decided to attend the meeting among the unrelated attendance group is greater than or equal to the number of optional members.

When the number of votes, quorum, and the number of optional members required are all satisfied, a meeting is confirmed to be held, and a meeting schedule is determined by setting the date selected by the largest number of members as a meeting date. However, if the requirements for the number of votes, quorum, and number of optional members are not met, the meeting will be canceled.

In this way, when the attendance group database 221 of the SNS server 22 and the scheduler server 222 determines to hold a meeting and determines a meeting schedule, the group information database 21 stores the meeting schedule of the corresponding community as new shared schedule information.

When shared schedule information is generated as described above, the group schedule management server 20 checks whether the user identification information input from the user terminal 5 matches the member information of the corresponding community stored in the attendance group database 221. In the case of matching, while transmitting the shared schedule information of the corresponding community to the main schedule management server 10, the group schedule management server 20 requests the main schedule management server 10 to check a conflict between the shared schedule information of the corresponding community (subscribed group) and the user's schedule information registered to the schedule information database 11 and selectively register the shared schedule information of the corresponding community (subscribed group) to the schedule information database 11 as the user's schedule information.

In addition, the main schedule management server 10 transmits a schedule registration confirmation signal to the user terminal 5 after schedule registration or a schedule conflict signal to the user terminal 5 according to a processing result from the schedule check and registration unit 14.

To use a schedule management service provided by the group schedule management server 20, the user may use a group schedule management service by installing and using a group schedule management app or program in addition to the main schedule management app or program.

As described above, the schedule management service system 1 including the main schedule management server 10 and the group schedule management server 20 has an advantage that while transmitting shared schedule information of a group (community) to which the user is subscribed to the main schedule management server 10, the grope schedule management server 20 requests the main schedule management server 10 to check a conflict between the shared schedule information and the user's schedule information registered to the schedule information database 11 and selectively register the shared schedule information to the schedule information database 11, and thereby, the shared schedule information not conflicting with the user's schedule information already registered among the shared schedule information of the group (community) to which the user is subscribed is automatically registered to the schedule information database 11 as the user's schedule information.

Starting from a meeting announcement by a group (community) host, the group schedule management server 20 assesses decisions collected from all of the members in the community based on their priority and promptly notifies all of the members, including the host, of the assessment result. Therefore, the group schedule management server 20 has an advantage in that it may quickly determine an optimal meeting schedule for the community.

In what follows, a structure of a schedule management service system according to yet another embodiment of the present disclosure will be described.

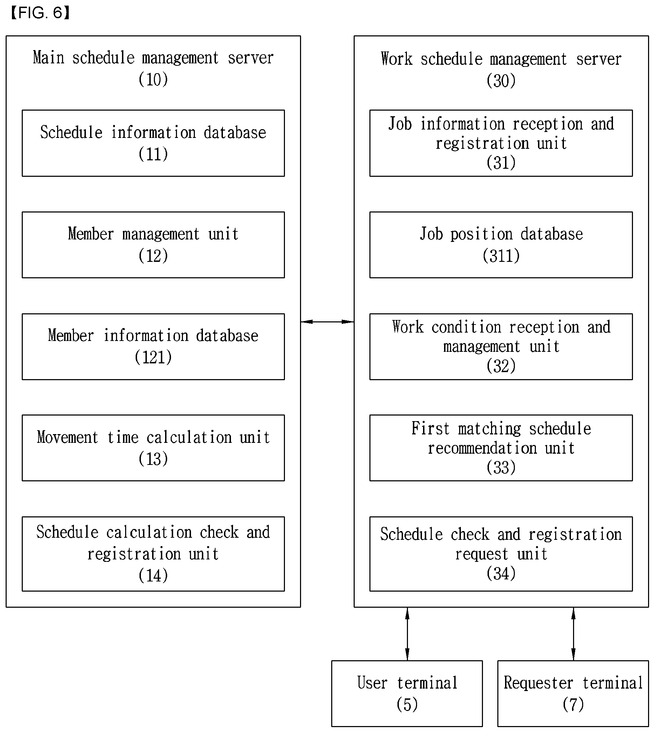

FIG. 6 is a block diagram illustrating a schedule management service system according to yet another embodiment of the present disclosure.

In one embodiment, the schedule management service system 1 according to the present disclosure may include the main schedule management server 10 and the work schedule management server 30.

Since the main schedule management server 10 is the same as the one described above, it will not be described again.

The work schedule management server 30 receives job information from at least one requester terminal 7; registers and manages the received job information by classifying the received job information according to categories, search words, areas, work execution times, and salaries; converts the job information satisfying conditions due to a request from at least one user terminal 5 into a schedule information form; and provides the converted job information to the at least one user terminal 5, which may include a job information reception and registration unit 31, a work condition reception and management unit 32, and a first matching schedule recommendation unit 33, and a schedule check and registration request unit 34.

The job information reception and registration unit 31 performs the function of receiving job information including work execution place information, work execution time information, and salary information from at least one requester terminal 7; registering the received job information to the job position database 311 by classifying the received job information according to categories, search words, areas, work execution times, and salaries; and supporting and managing searching, viewing, modifying, and deleting job information by a requester who has entered the job information.

A requester who wants to register job information to hire an employee or a worker accesses the job information reception and registration unit 31 through at least one requester terminal 7 and requests the job information reception and registration unit 31 to register the requester's job information to the job position database 311.

Accordingly, at least one requester terminal 7 provides at least one or more job information to the job information reception and registration unit 31, and the job information provided to the job information reception and registration unit 31 for each type of job information includes job type information, information on introduction to a job to be done, work execution place information, work execution period information, work execution time information, and salary information.

If at least one request terminal 7 requests registration of job information, the job information reception and registration unit 31 classifies the job information including job type information, information on introduction to a job to be done, work execution place information, work execution period information, and work execution time information, and salary information according to categories, search words, areas, work execution times, and salaries and registers the classified job information to the job position database 311.

At this time, if a job information registration request event is received from the at least one requester terminal 7, the job information reception and registration unit 31 may receive job information including job type information, information on introduction to a job to be done, work execution place information, work execution period information, and work execution time information, and salary information provided together with a job information registration request event.

On the other hand, after receiving a job information registration request event from at least one requester terminal 7, the job information reception and registration unit 31 may provide an information provision form including items of the necessary information and descriptions of the individual items to the requester terminal 7 which has transmitted the job information registration request event and cause the form to be displayed on the display unit of the requester terminal 7.

In this case, the requester terminal 7 receiving the information provision form may transmit the information required for the information provision form to the job information reception and registration unit 31 or transmit the information provision form containing the required information to the job information reception and registration unit 31.

The job information reception and registration unit 31 may determine whether job information received from at least one requester terminal 7 satisfies predetermined basic conditions and register the job information to the job position database 311 only when the basic conditions are satisfied.

The basic conditions tested by the job information reception and registration unit 31 may include whether or not the business entity operated by a requester is a registered, legal business entity; whether or not a document declaring or certifying that the information on the introduction to a job to be done is the same as actual tasks has been submitted; and whether or not an average value of user recommendations entered by the users who have performed the corresponding tasks for the job provided by the requester is less than a predetermined level.

The work condition reception and management unit 32 performs a function of receiving work conditions including information on type of job position of interest, information on a work area, and information on a work time zone from at least one user terminal 5 and storing and managing the received work conditions.

The work conditions received from the at least one user terminal 5 may include information on the type of job position of interest that the user seeks, information on a work area, information on a work time zone, and information on the salary, which may further include a work period.

At this time, the information on the type of job position of interest selected by the user may be the same as the job type information received from at least one requester terminal 7 by the job information reception and registration unit 31 or the same as the job classification information added in the process of classifying job information received by the job information reception and registration unit 31 according to categories, areas, work execution times, and salaries and registering the classified job information to the job position database 311.

It should be noted, however, that the work conditions may be set as a basic value provided by the work schedule management server 30.

For example, suppose the user selects and inputs in advance at least one or more of the information on the type of job position of interest, information on a work area, information on a work time zone, and information on the salary after installing a work schedule management app or program. Then the work condition reception and management unit 32 may request the user terminal 5 to which the user is logged in to input only the remaining information except for the previously input information when receiving work conditions from the user terminal 5 and may selectively modify the previously input information.

The work area information included in the work conditions may be selected and specified for each period by the user.

The work area information included in the work conditions may be set as work area information which includes appointment places of schedule information during a work period specified by the user among the user's schedule information registered in the schedule information database 11, by the work condition reception and management unit 32.

At this time, the work area information may be designated or set in units of specific administrative regions (for example, a city or a county).

That is, when a user enters a work condition by specifying a work period, the work condition reception and management unit 32 extracts schedule information of the user existing within the period designated as a work period from the schedule information database 11, determines whether appointment places of the extracted schedule information belong to a specific administrative region unit (for example, a city or a county), and if the appointment places belong to a specific administrative region unit, sets the administrative region (for example, Daejeon city) as work area information.

For example, suppose a user who usually lives in Seoul Metropolitan City inputs a work condition by setting a work period to span from August 26, 2019 to August 30, 2019 and all of the appointment places of the user's schedule information from August 26 to August 30 stored in the schedule information database 11 are in Daejeon. Then, the work condition reception and management unit 32 determines that the user stays in Daejeon during the period from August 26, 2019 to August 30, 2019 and sets the work area information during the period (work period) as Daejeon.

Meanwhile, one of a plurality of administrative region units may be selected and designated by the user for each period as the work area information included in the work conditions.

At this time, for each of the plurality of administrative region units, specific location information may be designated as a reference location by the user or set as a reference location by the work condition reception and management unit 32; and particular distance information may be designated or set as a limiting distance.

For example, if the administrative region unit designated or set as work area information is Seoul, the user may designate and enter Gwanghwamun or the user's accommodation as a reference location of Seoul; or the work condition reception and management unit 32 may set Gwanghwamun or the user's accommodation as the reference location.

In the same way, the user may designate and enter particular distance information as a limiting distance from a reference location of each administrative region unit and the work condition reception and management unit 32 may set particular distance information as a limiting distance of each administrative region unit.

The first matching schedule recommendation unit 33 performs a function of extracting job information which satisfies work conditions from the job position database 311 and the work execution time of which does not overlap the user's time zone with a schedule and providing, to the user terminal 5 to which the user has logged in, matching schedules obtained by converting the extracted job information to a schedule information form.

Here, to extract job information from the job database 311 where the work execution time does not overlap the user's time zone with a schedule, the first matching schedule recommendation unit 33 determines whether the corresponding user's schedule information registered in the schedule information database 11 overlaps in time with job information registered in the job position database 311 based on each work execution time of the job information; and extracts only the job information that does not overlap in time with the schedule information.

To describe in more detail, when extracting job information that satisfies the work condition from the job position database 311, the first matching schedule recommendation unit 33 extracts job information, the category of which corresponds to the information on the type of job position of interest, the work execution place of which is included in an administrative region unit designated or set as work area information of the work conditions, the work execution time of which is matched to the work time zone information of the work condition and does not overlap with the corresponding user's time zone with a schedule; and provides matching schedules obtained by converting the extracted job information into a schedule information form to the user terminal 5 to which the user has logged in.

At this time, the work condition reception and management unit 32 may set the work area information as work area information which includes appointment places of schedule information during a work period designated by the user from the user's schedule information registered in the schedule information database 11, where the work area information may be designated or set in units of specific administrative regions as described above.

Meanwhile, when one of a plurality of administrative region units is selected and designated by the user as the work area information included in the work conditions, specific location information is designated by the user or set by the work condition reception and management unit 32 as a reference location for each of the plurality of administrative region units, and particular distance information is designated by the user or set by the work condition reception and management unit 32 as a limiting distance from the reference location of each of the plurality of administrative region units, the first matching schedule recommendation unit 33, to extract job information that satisfies the work conditions from the job position database 311, extracts job information, the category of which corresponds to the information on the type of job position of interest in the work conditions, where the distance between the work execution place of the job information and the reference location of the administrative region unit designated or set as work area information of the work condition is smaller than or equal to the limiting distance of the administrative region unit, the work execution time of which is matched to the information on the work time zone of the work conditions and does not overlap with a time zone having a schedule of the corresponding user, and provides matching schedules obtained by converting the extracted job information into a schedule information form to the user terminal 5 to which the user has logged in.

For example, suppose a user designates and enters a work period from August 1 to August 23, 2019 (excluding weekends), selects a work area as Seoul, Gwanghwamun is designated by the user or set by the work condition reception and management unit 32 as a reference location of Seoul, and a distance of 10 km is designated by the user or set by the work condition reception and management unit 32 as the limiting distance. The first matching schedule recommendation unit 33 extracts job information, where the category of the job information corresponds to the information on the type of job position of interest in the work conditions during the work period, the distance between the work execution place of the job information and Gwanghwamun is within 20 km, the work execution time of the job information is matched to the information on the work time zone of the work conditions, and the job information does not overlap with a time zone having a schedule of the corresponding user, and provides matching schedules obtained by converting the extracted job information into a schedule information form to the user terminal 5 to which the user has logged in.

Also, suppose the user designates and enters a work period from August 26 to August 30, 2019, selects a work area as Daejeon city, Daejeon city hall is designated by the user or set by the work condition reception and management unit 32 as a reference location of Daejeon, and a distance of 30 km is designated by the user or set by the work condition reception and management unit 32 as the limiting distance. The first matching schedule recommendation unit 33 extracts job information, where the category of the job information corresponds to the information on the type of job position of interest in the work conditions during the work period, the distance between the work execution place of the job information and Daejeon city hall is within 30 km, the work execution time of the job information is matched to the information on the work time zone of the work conditions, and the job information does not overlap with a time zone having a schedule of the corresponding user, and provides matching schedules obtained by converting the extracted job information into a schedule information form to the user terminal 5 to which the user has logged in.

When a schedule selection event for selecting one of the matching schedules by the user is received from at least one user terminal 5, the schedule check and registration request unit 34 performs functions of transmitting the schedule selected by the user to the main schedule management server 10, checking a conflict with the user's schedule information registered to the schedule information database 11, and requesting the main schedule management server 10 to selectively register the selected schedule to the schedule information database 11 as the user's schedule information.

Then, the main schedule management server 10, according to the result of processing the request from the schedule check and registration request unit 34 by the schedule check and registration unit 14, may transmit a schedule registration confirmation signal to the user terminal 5 and the work schedule management server 30 after schedule registration or transmit a schedule conflict signal to the user terminal 5 and the work management server 30.

In other words, the schedule check and registration unit 14 compares a time interval between the end time of an immediately preceding schedule and an appointment time of a selected schedule (first time interval) with a first required movement time and compares a time interval between the end time of the selected schedule and an appointment time of an immediately subsequent schedule (second time interval) with a second required movement time; if the selected schedule conflicts with the immediately preceding schedule or the immediately subsequent schedule, the main schedule management server 10 transmits a schedule conflict signal to the user terminal 5 to which the user has logged in and the work schedule management server 30.

Meanwhile, if the work schedule management server 30 receives a schedule conflict signal from the main schedule management server 10, the work schedule management server 30 again provides the matching schedules except for the selected schedule to the user terminal 5 to which the user has logged in.

Although the descriptions above assume that the main schedule management server 10 transmits a schedule conflict signal to the user terminal 5 to which the user has logged in and the work schedule management server 30, when a selected schedule conflicts with an immediately preceding schedule or an immediately subsequent schedule, the main schedule management server 10 may transmit a schedule conflict signal to the work schedule management server 30, and the work schedule management server 30 may provide the matching schedules except for the selected schedule to the user terminal 5 to which the user has logged in together with a schedule conflict signal.

If the work schedule management server 30 receives a schedule selection event in which the user selects one of the matching schedules from at least one user terminal 5 and a schedule registration confirmation signal from the main schedule management server 10, the work schedule management server 30 extracts the user's information from the member information database 121, transmits the user's information and the received schedule selection event to the requester terminal 7 which has entered the corresponding job information, maps the received schedule selection event to the corresponding job information, and stores the mapped job information to the job position database 311 to update the corresponding job information.

As a work schedule management app or program that the user installs to use a schedule management service provided by the work schedule management server 30, a number of individual apps or programs may be provided for each type of job position that the user seeks.

For example, if the user is an artist looking for a job related to a performance, the user may install an artist app or program to receive job information looking for a performer, register the user's schedule information, and obtain a job related to the performance; similarly, if the user is a lecturer or a teacher, the user may install a tutor app or program to receive job information looking for a lecturer or a private teacher and register the user's schedule information to obtain a desired job.

In this case, if the user installs the corresponding app or program and signs up for membership, the user is considered to have selected job position information related to the corresponding app or program as the information on job position of interest.

As descried above, the schedule management service system 1 including the main schedule management server 10 and the work schedule management server 30 has an advantage in that the work schedule management server 30 receives a work condition from the user terminal 5, converts job information satisfying the work condition into a form of schedule information, provides the converted job information to the user terminal 5, selectively registers a schedule selected by the user to the schedule information database 11 as the user's schedule information, and allows the user to select a desired job position from among matching schedules provided by the work schedule management app or program and to register the selected job position directly as the user's schedule information.

In what follows, a structure of a schedule management service system according to still another embodiment of the present disclosure will be described.

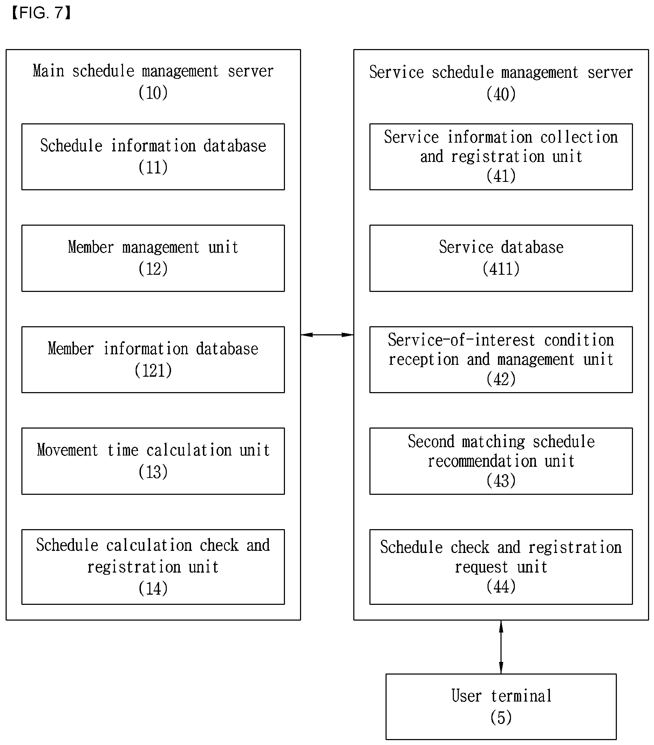

FIG. 7 is a block diagram illustrating a schedule management service system according to still another embodiment of the present disclosure.

In one embodiment, the schedule management service system 1 according to the present disclosure may include the main schedule management server 10 and the service schedule management server 40.

Since the main schedule management server 10 is the same as the one described above, it will not be described again.

The service schedule management server 40 collects service information from the Internet; registers and manages the collected service information by classifying the collected service information according to categories, search words, areas, service provision times, and cost; converts the service information satisfying conditions due to a request from at least one user terminal 5 into a schedule information form; and provides the converted service information to the at least one user terminal 5, which may include a service information collection and management unit 41, a service-of-interest condition reception and management unit 42, and a second matching schedule recommendation unit 43, and a registration request unit 44.

The service information collection and management unit 41 performs a function of collecting service information including service provision place information and service provision time information from the Internet; classifying the collected service information according to categories, search words, areas, service provision times, and cost; and registering the classified service information to a service database 411; and managing the registered service information.

To this end, the service information collection and management unit 41 collects service information provided by various subjects to general consumers as targets from various sources on the Internet, namely, Facebook, Twitter, blogs, news, emails, text messages, and messengers (Kakaotalk); extracts service provision place information, service provision period information, and service provision time information from the data collected through natural language processing; classifies the collected service information according to categories, search words, areas, service provision times, and cost; registers the classified service information to the service database 411; and manages the registered service information.

To collect service information from various sources on the Internet, the service information collection and management unit 41 may be equipped with a module capable of accessing the respective sources.

Since most of website-based SNSs such as Facebook and Twitter provide their own APIs, necessary information may be collected under the users' consent.

For web pages such as blogs and news, a specific URL may be designated in advance, and HTML and text on the web related to the service of interest that the user wants to use may be collected through periodic access to the lower addresses of the specific URL. The collection of such service information may be performed by a robot using an algorithm.

In the case of an e-mail, received e-mails may be stored in an e-mail database allocated for each user using a service that automatically forwards an e-mail received by the user. Therefore, the contents of a service of interest may be collected from the e-mails received by the user.

In the case of text messages and messengers (KakaoTalk), if at least one user terminal 5 receives a text or messenger message, in which a service schedule management app or program for using a schedule management service provided by the service schedule management server 40 is installed, the service schedule management app or program transmits the received message to the service schedule management server 40, and the service schedule management server 40 may collect the contents of a service of interest from the received text or messenger message.

The service information collection and management unit 41 filters collected service information through natural language processing to extract necessary information such as service type information, service provision place information, service provision period information, and service provision time information; classifies the service information according to categories, search words, areas, service provision times, and cost; and registers the classified service information to the service database 411.

The filtering method according to one embodiment indexes the collected web data based on their source and stores the indexed web data to the service database 411, where e-mail text is indexed with e-mails, SNS text is indexed with SNS text, and news and messenger text (Kakaotalk) are indexed with the respective names and stored in the service database 411. The filtering method then retrieves service information corresponding to the information on the type of service of interest received from the user terminal 5 among the service information stored in the service database 411; and extracts service provision place information, service provision period information, and service provision time information from the retrieved service information, where the whole process is performed through natural language processing.

For typical expressions, information is extracted using a rule-based method while, for non-conventional expressions, information is extracted by calculating a statistical similarity between similar expressions through machine learning (ML). The documents tagged in advance with "human," "time," "place," and "subject," and the like are used for ML with respect to specific words, after which the corresponding information may be extracted from a new document.

The service-of-interest condition reception and management unit 42 performs a function of receiving conditions for a service of interest including information on the type of service of interest and service use time zone information from at least one user terminal 5 and storing and managing the received service conditions.

The conditions for a service of interest received from at least one user terminal 5 may include information on the type of service of interest, service use time zone information, and service charge information, which may further include service use area information and information on the period during which a user wants to use a service (service use period).

At this time, the information on the type of service of interest to be selected by a user may be the same as the service classification information added during a process of classifying service information collected by the service information collection and management unit 41 according to categories, search words, areas, service provision times, and cost; and registering the classified service information to the service database 411.

However, a default value provided by the service schedule management server 40 may be set as the information on the type of service of interest.

For example, if the user selects and inputs at least one or more of information on the type of service of interest, service use time zone information, service charge information, and service use area information in advance after installing a service schedule management app or program, the service-of-interest condition reception and management unit 42 may request the user to enter only the remaining information except for the previously input information when receiving conditions for a service of interest from the user terminal 5 to which the user has logged in and may optionally allow the previously input information to be modified.

The service use area information included in the conditions for a service of interest may be automatically set to one of a plurality of administrative region units by the service-of-interest condition reception and management unit 42.

The service-of-interest condition reception and management unit 42 may set an administrative region unit among a plurality of administrative region units, which includes appointment places of schedule information during a service use period specified by the user from among the corresponding user's schedule information registered in the schedule information database 11, as the service use area information.

When the user's schedule information registered in the schedule information database 11 does not exist during the service use period specified by the user, the service-of-interest condition reception and management unit 42 may set an administrative region unit including an appointment place of an immediately preceding schedule temporally close to the start time of the service use period and an appointment place of an immediately subsequent schedule temporally close to the end time of the service use period as service use area information.

In other words, when a user specifies a service use period and inputs conditions for a service of interest, the service-of-interest condition reception and management unit 42 extracts the user's schedule information belonging to the period specified as a service use period from the schedule information database 11, determines whether appointment places of the extracted schedule information belongs to a specific administrative region unit (for example, a city or a county), and set the administrative region unit (for example, Daejeon city) as the service use area information if the appointment places belong to the specific administrative region unit.

For example, if a user who usually lives in Seoul enters conditions for a service of interest by specifying the service use period to be from August 26 to August 30, 2019 while all of the appointment places of the user's schedule information from August 26 to August 30 stored in the schedule information database 11 are in Daejeon, the condition reception and management unit 42 for service of interest determines that the user is going to stay in Daejeon during the period from August 26 to August 30, 2019 and sets Daejeon as the service use area information during the period (service use period).

As described above, the condition reception and management unit 42 may set one of a plurality of administrative region units as the service use area information included in the conditions for a service of interest.

At this time, specific location information may be designated by the user or set by the service-of-interest condition reception and management unit 42 as a reference location for each of the plurality of administrative region units, or particular distance information may be designated or set as a limiting distance.

For example, when the administrative region unit set as service use area information is Seoul metropolitan city, the user may designate and input Gwanghwamun or the user's accommodation as a reference location of Seoul, or the service-of-interest condition reception and management unit 42 may set Gwanghwamun or the user's accommodation as the reference location.

In the same manner, the user may designate and enter particular distance information as a limiting distance from a reference location of each administrative region unit, and the service-of-interest condition reception and management unit 42 may set particular distance information as a limiting distance of each administrative region unit.

The second matching schedule recommendation unit 43 performs a function of extracting service information, which satisfies conditions for a service of interest and the service provision time of which overlaps with service use time zone information included in the conditions for the service of interest and the user's time zone without a schedule, and providing matching schedules obtained by converting the extracted service information to a schedule information form to the user terminal 5 to which the corresponding user has logged in.

Here, to extract job information of which the service provision time overlaps the user's time zone without a schedule from the service database 411, the second matching schedule recommendation unit 43 extracts, with respect to the service provision time of each service information registered in the service database 411, only the service information for which the corresponding user's schedule information registered in the schedule information database 11 does not exist within the service provision time during the service use period included in the conditions for a service of interest or for which the corresponding user's schedule information exists but a time interval between an appointment time and an end time of the registered schedule information overlaps only with part of the service provision time.

In other words, when extracting service information that satisfies conditions for a service of interest from the service database 411, the second matching schedule recommendation unit 43 extracts service information, the category of which corresponds to the information on the type of service of interest included in the conditions for a service of interest, the service provision place of which is included within an administrative region unit set as a service use area information of the conditions for a service of interest, the service provision time of which coincides with the service use time zone information of the conditions for a service of interest, and which overlaps with the corresponding user's time zone without a schedule; and provides matching schedules obtained by converting the extracted service information into a schedule information form to the user terminal 5 to which the user has logged in.

At this time, as described above, among the user's schedule information, the work area information of which is registered in the schedule information database 11, an administrative region unit may be set as the service use area information by the service-of-interest condition reception and management unit 42, where the administrative region unit includes appointment places of schedule information during a service use period specified by the user or includes an appointment place of an immediately preceding schedule temporally close to the start time of the service use period and an appointment place of an immediately subsequent schedule temporally close to the end time of the service use period.

When the service use area information included in the conditions for a service of interest is set by the service-of-interest condition reception and management unit 42 to one of a plurality of administrative region units, specific location information in each of the plurality of administrative district units is designated as a reference location by the user or set by the condition reception and managing unit for service of interest 42, and particular distance information is designated or set as a limiting distance, to extract service information that satisfies the conditions for a service of interest from the service database 411, the second matching schedule recommendation unit 43 extracts service information, the category of which corresponds to the information on the type of service of interest included in the conditions for a service of interest, the service provision place of which is located within a limiting distance of an administrative region unit from a reference location of the administrative region unit designated or set as the service use area information of the conditions for a service of interest, the service provision time of which coincides with the service use time zone information of the conditions for a service of interest, and which overlaps with the corresponding user's time zone without a schedule; and provides matching schedules obtained by converting the extracted service information into a schedule information form to the user terminal 5 to which the user has logged in.

For example, suppose a user designates and enters a service use period from August 1 to August 23, 2019 (excluding weekends), Seoul is set as service use area information by a determination of the service-of-interest condition reception and management unit 42, Gwanghwamun is designated by the user or set by the service-of-interest condition reception and management unit 42 as a reference location of Seoul, and a distance of 20 km is designated by the user or set by the service-of-interest condition reception and management unit 42 as a limiting distance. The second matching schedule recommendation unit 43 extracts service information, the category of which corresponds to the information on the type of service of interest in the conditions for a service of interest, the service provision place of which located within 20 km from Gwanghwamun, the service provision time of which coincides with the service use time zone information of the conditions for a service of interest, and which overlaps with the corresponding user's time zone without a schedule; and provides matching schedules obtained by converting the extracted service information into a schedule information form to the user terminal 5 to which the user has logged in.

Also, suppose the user designates and enters a service use period from August 26 to August 30, 2019, Seoul is set as service use area information by a determination of the service-of-interest condition reception and management unit 42, Daejeon city hall is designated by the user or set by the service-of-interest condition reception and management unit 42 as a reference location of Daejeon, and a distance of 30 km is designated by the user or set by the service-of-interest condition reception and management unit 42 as a limiting distance. The second matching schedule recommendation unit 43 extracts service information, the category of which corresponds to the information on the type of service of interest in the conditions for a service of interest, the service provision place of which located within 30 km from Daejeon city hall, the service provision time of which coincides with the service use time zone information of the conditions for a service of interest, and which overlaps with the corresponding user's time zone without a schedule; and provides matching schedules obtained by converting the extracted service information into a schedule information form to the user terminal 5 to which the user has logged in.

On the other hand, when the second matching schedule recommendation unit 43 provides the matching schedules obtained by converting the extracted service information into the schedule information form to the user terminal 5 to which the user has logged in, the second matching schedule recommendation unit 43 calculates a recommendation rank according to a sum of values obtained by multiplying each of the reciprocal of the number of views ranking and the reciprocal of the user's recommendation ranking with respect to the extracted service information by a predetermined weight and displays matching schedules corresponding to the extracted service information sequentially on the user terminal 5 to which the user has logged in.

When the schedule check and registration request unit 44 receives a schedule selection event in which the user selects one of the matching schedules from at least one user terminal 5, the schedule check and registration request unit 44 performs a function of transmitting the schedule selected by the user to the main schedule management server 10, checking a conflict with the user's schedule information registered in the schedule information database 11, and requesting the main schedule management server 10 to selectively register the selected schedule to the schedule information database 11 as the user's schedule information.

The main schedule management server 10 transmits a schedule registration confirmation signal to the user terminal 5 and the service schedule management server 40 after schedule registration or a schedule conflict signal to the user terminal 5 and the service schedule management server 40 according to a result of processing a request from the schedule check and registration unit 44 by the schedule check and registration unit 14.

In other words, the schedule check and registration unit 14 compares a time interval between the end time of an immediately preceding schedule and an appointment time of a selected schedule (first time interval) with a first required movement time and compares a time interval between the end time of the selected schedule and an appointment time of an immediately subsequent schedule (second time interval) with a second required movement time; if the selected schedule conflicts with the immediately preceding schedule or the immediately subsequent schedule, the main schedule management server 10 transmits a schedule conflict signal to the user terminal 5 to which the user has logged in and the service schedule management server 40.

Meanwhile, if the service schedule management server 40 receives a schedule conflict signal from the main schedule management server 10, the service schedule management server 40 again provides the matching schedules except for the selected schedule to the user terminal 5 to which the user has logged in.

Although the descriptions above assume that the main schedule management server 10 transmits a schedule conflict signal to the user terminal 5 to which the user has logged in and the service schedule management server 40, when a selected schedule conflicts with an immediately preceding schedule or an immediately subsequent schedule, the main schedule management server 10 may transmit a schedule conflict signal to the service schedule management server 40, and the service schedule management server 40 may provide the matching schedules except for the selected schedule to the user terminal 5 to which the user has logged in together with a schedule conflict signal.

For a service schedule management app or program installed by the user to use a schedule management service provided by the service schedule management server 40, a plurality of individual apps or programs may be provided for each type of service that the user wants to use.

For example, if a user wants to use a performance service such as a play, a musical, or a concert, the user may install a performance app or program to receive performance-related service information and register the received service information as the user's schedule information while, if the user wants to use dental practice and treatment services, the user may install a dental app or program to receive dental practice and treatment service information and register the received service information as the user's schedule information.

In this case, when the user installs the corresponding app or program and signs up for membership, the user is considered to have selected the information on the service type related to the corresponding app or program as the information on the type of service of interest.

As descried above, the schedule management service system 1 including the main schedule management server 10 and the service schedule management server 40 has an advantage in that the service schedule management server 40 receives conditions for a service of interest from the user terminal 5, converts service information satisfying the conditions into a form of schedule information, provides the converted service information to the user terminal 5, selectively registers a schedule selected by the user to the schedule information database 11 as the user's schedule information, and allows the user to select a desired service from among matching schedules provided by the service schedule management app or program and to register the selected service directly as the user's schedule information.

In what follows, a structure of a schedule management service system according to yet still another embodiment of the present disclosure will be described.

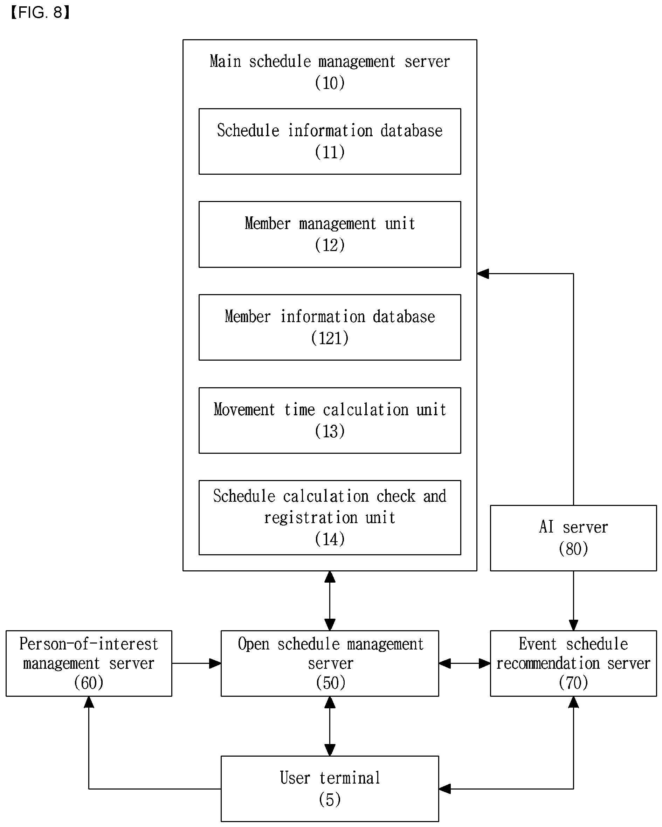

FIG. 8 is a block diagram illustrating a schedule management service system according to yet still another embodiment of the present disclosure.

In one embodiment, a schedule management service system 1 according to the present disclosure may include a main schedule management server 10 and an open schedule management server 50.

Since the main schedule management server 10 is the same as the one described above, it will not be described again.

The open schedule management server 50 performs a function of registering and managing each of the followers who wish to share the schedule information of a leader, who is a specific user, as one of active supporters, friendly supporters, critical supporters, and criticizers and sharing the leader's schedule information registered in the schedule information database 11 as personal schedule information differently among the active supports, friendly supporters, critical supporters, and criticizers according to the attributes given to each of the leader's schedule information registered in the schedule information database 11.

In other words, the open schedule management server 50 shares schedule information to which the leader has given an active supporter open attribute as personal schedule information with those users registered as an active supporter among the followers, shares schedule information to which the leader has given a friendly supporter open attribute as personal schedule information with those users registered as an active and friendly supporters among the followers, shares schedule information to which the leader has given a critical supporter open attribute as personal schedule information with those users registered as an active, friendly, and critical supporters among the followers, and shares schedule information to which the leader has given an all-open attribute as personal schedule information with the followers except for those users registered as a criticizer and all of the users who are not a follower of the leader.

Through the open schedule management server 50, celebrities (leaders) such as entertainers, politicians, and writers may share their schedule information with followers who want to share the schedule information of the celebrities.

The leader opens a community of his or her own using an open schedule management app or program that a user installs to use a schedule management service provided by the open schedule management server 50, recruits followers who wish to share the leader's schedule information, and registers and manages the followers as one of the active supporters, friendly supporters, critical supporters, and criticizers.

In a step of inputting schedule information using a main schedule management app or program, the leader may assign the active supporter open attribute, friendly supporter open attribute, critical supporter open attribute, or all-open attribute to the schedule information; or assign the active supporter open attribute, friendly supporter open attribute, critical supporter open attribute, or all-open attribute to each of the schedule information registered in the schedule information database 11, thereby managing relationships with the followers by sharing the leader's schedule information differently with the followers.

The open schedule management server 50 may share the location information of the leader's user terminal 5 differently with the leader's followers.

To this end, the leader registers and manages each of his or her followers as one of an approach notification target and an approach notification non-target.

The open schedule management server 50 obtains, from the user terminal 5, the location information received from GPS satellites by the leader's user terminal 5 and provides the current location information of the leader to the user terminals 5 of the users registered as an approach notification target among the followers.

The user terminal 5 receiving the current location information of the leader may output an approach notification only when the distance between the leader's current location and the location information (current location of the follower) received from GPS satellites by the user terminal 5 that has received the current location information of the leader is less than or equal to a previously designated or set limiting distance.

To this end, each of the followers who want to receive the leader's current location information may specify and input a limiting distance in advance based on below what distance between the leader's current location and the follower's current location he or she wants to receive an approach notification; and the limiting distance of each follower may be stored in the open schedule management server 50.

On the other hand, the limiting distance of each of the followers may be designated by the leader collectively or individually, and the limiting distance of each of the followers may be set collectively or individually by the open schedule management server 50.

Through the function of providing the current location information of the leader and an approach notification, the follower may receive an approach notification when the leader is within a limiting distance (for example, 5km or 50km) from the follower's current location, check the leader's current location, check the leader's schedule information received as personal schedule information and the follower's schedule information, and take action such as attending an event or a performance organized by the leader.

Meanwhile, the leader may be a sales person who sells a specific product or a service provider who provides a specific service rather than a celebrity such as an entertainer, a politician, or a writer.

In this case, the leader's schedule information shared differently among followers by the open schedule management server 50 may be used as sales or event schedule information of a product sales person or a service provider.

The schedule management service system 1 according to the present disclosure may include a person-of-interest management server 60 in addition to the main schedule management server 10 and the open schedule management server 50.

Users who use the schedule management service system 1 according to the present disclosure may register as a follower of several leaders by inputting information of person-of-interest (leaders) such as entertainers, politicians, and writers of whom the users want to receive schedule information or current location information through their user terminal 5; and the person-of-interest information of each user is stored and managed in the person-of-interest management server 60.

In other words, the person-of-interest management server 60 receives the person-of-interest information of a logged-in user from at least one user terminal 5, stores and manages the received person-of-interest information, and requests the open schedule management server 50 to register the logged-in user as a follower supposed to receive schedule information of the users (leaders) matching the person-of-interest information.

However, the function of the person-of-interest management server 60 may be performed by the open schedule management server 50, and in this case, person-of-interest information of each user is stored and managed in the open schedule management server 50.

In other words, the schedule management service system 1 according to the present disclosure may be constructed to include a separate person-of-interest management server 60 that performs the function described above or may be constructed to include only the open schedule management server 50 that performs the function of the person-of-interest management server 60 by itself without involving the person-of-interest management server 60.

The schedule management service system 1 according to the present disclosure may include an event schedule recommendation server 70 in addition to the main schedule management server 10, the open schedule management server 50, and the person-of-interest management server 60 or may further include only the event schedule recommendation server 70 without involving the person-of-interest management server 60.

According to the schedule management service system 1 of the present disclosure, a user registered as a follower of at least one or more leaders receives the leader's schedule information as personal schedule information; even a user who has not registered as a follower still receives the schedule information for which leaders have given the all-open attribute at any time as personal schedule information; and the event schedule recommendation server 70 performs a function of extracting sale, event, or performance schedule information from among the personal schedule information open to each user and providing recommended schedules to the user terminal 5 to which the user has logged in.

In other words, the event schedule recommendation server 70 transmits identification information of the user who has logged in to at least one user terminal 5 to the open schedule management server 50; receives personal schedule information open to the user from the open schedule management server 50; extracts sale, event, or performance schedule information (event schedule information) from among the personal schedule information open to the user; and provides recommended schedules, which are schedule information such that an event time included in the extracted event schedule information overlaps with the user's time zone without a schedule, to the user terminal 5 to which the user has logged in.

Here, to extract again schedule information in which an event time included in the extracted event schedule information overlaps with the user's time zone without a schedule, the event schedule recommendation server 70 extracts only the event schedule information for which the user's schedule information registered in the schedule information database 11 does not exist within the event times during the event period of each of the extracted event schedule information or for which the user's schedule information exists but a time interval between an appointment time and an end time of the registered schedule information overlaps only with part of the event time.

Meanwhile, the event schedule recommendation server 70 may include a schedule check and registration request unit (not shown).

When the schedule check and registration request unit of the event schedule recommendation server 70 receives a schedule selection event in which the user selects one of the recommended schedules from at least one user terminal 5, the schedule check and registration request unit performs a function of transmitting the schedule selected by the user to the main schedule management server 10, checks a conflict with the user's schedule information registered in the schedule information database 11, and requests the main schedule management server 10 to selectively register the selected schedule to the schedule information database 11 as the user's schedule information.

The main schedule management server 10 transmits a schedule registration confirmation signal to the user terminal 5 and the event schedule recommendation server 70 after schedule registration or a schedule conflict signal to the user terminal 5 and the event schedule recommendation server 70 according to a result of processing a request from the schedule check and registration request unit of the event schedule recommendation server 70 by the schedule check and registration unit 14.

In other words, the schedule check and registration unit 14 compares a time interval between the end time of an immediately preceding schedule and an appointment time of a selected schedule (first time interval) with a first required movement time and compares a time interval between the end time of the selected schedule and an appointment time of an immediately subsequent schedule (second time interval) with a second required movement time; if the selected schedule conflicts with the immediately preceding schedule or the immediately subsequent schedule, the main schedule management server 10 transmits a schedule conflict signal to the user terminal 5 to which the user has logged in and the event schedule recommendation server 70.

Meanwhile, if the event schedule recommendation server 70 receives a schedule conflict signal from the main schedule management server 10, the event schedule recommendation server 70 again provides the recommended schedules except for the selected schedule to the user terminal 5 to which the user has logged in.

Although the descriptions above assume that the main schedule management server 10 transmits a schedule conflict signal to the user terminal 5 to which the user has logged in and the event schedule recommendation server 40, when a selected schedule conflicts with an immediately preceding schedule or an immediately subsequent schedule, the main schedule management server 10 may transmit a schedule conflict signal to the event schedule recommendation server 70, and the event schedule recommendation server 70 may provide the recommended schedules except for the selected schedule to the user terminal 5 to which the user has logged in together with a schedule conflict signal.

The schedule management service system 1 according to the present disclosure may include an artificial intelligence (Al) server 80 in addition to the main schedule management server 10, the open schedule management server 50, the person-of-interest management server 60, and the event schedule recommendation server 70 or may further include only the AI server 80 without involving the person-of-interest management server 60.

The AI server 80 performs a function of analyzing schedule information of a logged-in user registered in the schedule information database 11 and predicting the user's location during the user's time zone without a schedule.

For example, even when a particular user's schedule registered in the schedule information database 11 almost dose not exists up to one month from the current date, the AI server 80 may figure out the user's behavior pattern by analyzing schedule information for the past few years and predict the user's location up to one month from the current date for each date and time based on the user's behavior pattern.

However, prediction of the user's location may be performed so that the AI server 80 predicts the user's location in advance before the event schedule recommendation server 70 generates a request, and upon receiving a request from the event schedule recommendation server 70, the AI server 80 transmits the predicted location information of the user to the event schedule recommendation server 70.

The event schedule recommendation server 70 may store and manage a limiting distance to inform the user only of the event schedule information where a distance between an event place included in the event schedule information and the user's predicted location is within a predetermined distance.

In other words, the user may designate and enter particular distance information as a limiting distance for receiving an event schedule recommendation, and the event schedule recommendation server 70 may set particular distance information as a limiting distance for schedule recommendation.

Accordingly, when the event schedule recommendation server 70 extracts sale, event, or performance schedule information (event schedule information) from among the personal schedule information open to a particular user and provides schedule information, in which an event time included in the extracted event schedule information overlaps with the user's time zone without a schedule, to the user terminal 5 to which the user has logged in, the event schedule recommendation server 70 provides, to the user terminal 5 to which the user has logged in, only the event schedule information where a distance between an event place included in the event schedule information and the user's predicted location is within a predetermined distance as a recommended schedule.

In other words, the event schedule recommendation server 70 transmits identification information of the user who has logged in to at least one user terminal 5 to the open schedule management server 50; receives personal schedule information open to the user from the open schedule management server 50; receives a predicted location of the user from the AI server 80; extracts sale, event, or performance schedule information (event schedule information) from among the personal schedule information open to the user; and provides, to the user terminal 5 to which the user has logged in, schedule information, in which an event time included in the extracted event schedule information overlaps with the user's time zone without a schedule and a distance between an event place included in the extracted event schedule information and the predicted location of the user is within the limiting distance, as a recommended schedule.

For example, when the AI server 80 predicts that a predicted location during a particular user's time zone in a weekday without a schedule is in the vicinity of the user's workplace (office), and a distance of 5 km is designated or set as the limiting distance, the event schedule recommendation server 70 provides event schedule information in which an event time overlaps with the user's time zone without a schedule and a distance between an event place and the user's workplace is within 5 km to the user terminal 5 to which the user has logged in as a recommended schedule from among event schedule information related to a sale or an event.

For example, when the AI server 80 predicts that a predicted location during a particular user's time zone in a holiday without a schedule is in the vicinity of the user's accommodation (home), and a distance of 50 km is designated or set as the limiting distance, the event schedule recommendation server 70 provides event schedule information in which an event time overlaps with the user's time zone without a schedule and a distance between an event place and the user's accommodation is within 50 km to the user terminal 5 to which the user has logged in as a recommended schedule from among event schedule information related to a sale, an event, or a performance.

For an open schedule management app or program installed by the user to use a schedule management service provided by the open schedule management server 50, one integrated open schedule management app or program may be provided, or a plurality of individual apps or programs may be provided for each person of interest (leader) such as a celebrity, a politician, or a writer for whom the user wants to receive schedule information or current location information.

For example, if a user wants to receive schedule information or current location information of a specific celebrity or politician, the user may install and use an app or a program that provides schedule information or current location information of the leader; in this case, if the user installs the corresponding app or program and signs up for membership, the user is considered to have agreed to be registered as a follower to the leader.

In what follows, a structure of a schedule management service system according to still yet another embodiment of the present disclosure will be described.

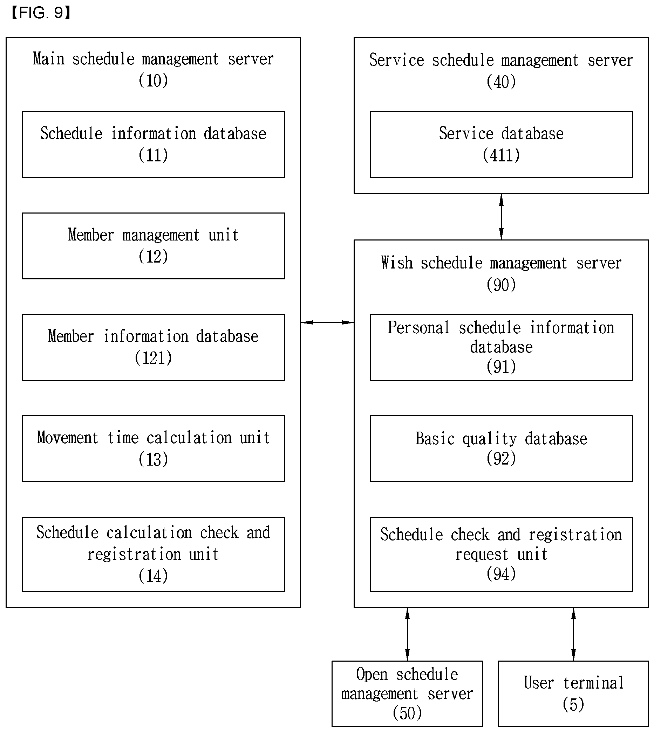

FIG. 9 is a block diagram illustrating a schedule management service system according to still yet another embodiment of the present disclosure.

In one embodiment, a schedule management service system 1 according to the present disclosure may include a main schedule management server 10, a service schedule management server 40, an open schedule management server 50, and a wish schedule management server 90.

Since the main schedule management server 10, the service schedule management server 40, and the open schedule management server 50 are the same as those described above, they will not be described again.

The wish schedule management server 90 receives, stores, and manages target job information of a logged-in user from at least one user terminal 5; collects personal schedule information open to the logged-in user; registers the collected personal schedule information to the personal schedule information database 91; manages the registered personal schedule information; accesses a basic quality database 92 matching target job information among a plurality of basic quality databases 92, retrieves basic qualities needed for achieving the target job, determines the highest priority basic quality to be achieved in consideration of the user's age; extracts those related to the highest priority basic quality among service information registered to the service database 411 and personal schedule information registered to the personal schedule information database 91, and provides, to the user terminal 5 to which the user has logged in, recommended schedules obtained by converting service information and personal schedule information of which the service provision time or the schedule progress time included in the extracted service information and personal schedule information overlaps with the user's time zone without a schedule into a schedule information format, where the wish schedule management server 90 may include a personal schedule information database 91, a basic quality database 92, and a schedule check and registration request unit 94.

To help the user achieve a target job desired by the user, the wish schedule management server 90 performs a function of recommending a schedule useful for the user to achieve the target job and registering a schedule selected by the user selectively to the schedule information database 11 as the user's schedule information by determining the highest priority basic quality from among basic quality items needed for achieving the target job and providing, to the user terminal 5 to which the user has logged in, recommended schedules obtained by converting service information and personal schedule information of which the service provision time or the schedule progress time included in the service information and personal schedule information related to the highest priority basic quality overlap with the user's time zone without a schedule into a schedule information form.

The wish schedule management server 90 transmits identification information of a user who has logged in to at least one user terminal 5 to the open schedule management server 50, receives personal schedule information open to the user from the open schedule management server 50, registers the received information to the personal schedule information database 91, and manages the registered information.

The personal schedule information database 91 may have a separate personal schedule information database 91 for each user so that a plurality of personal schedule information databases 91 may be operated, or one personal schedule information database 91 may store and operate personal schedule information open to each user for individual users.

Meanwhile, the user selects a target job that the user wants to achieve among a plurality of target jobs provided by the wish schedule management server 90 and enters the selected target job.

The wish schedule management server 90 constructs a basic quality database 92 to which basic quality items required to achieve the respective target jobs are registered and a quality resource database (not shown) to which services, meetings, or events helpful for achieving the respective basic quality items are registered.

In other words, since the basic quality database 92 to which the basic quality items necessary for achieving a target job are registered is constructed for each target job, as many basic quality databases 92 as the number of target jobs from among the user may select are constructed for the corresponding target jobs, and since a quality resource database to which related resources useful for achieving the corresponding basic quality item are registered is constructed for each basic quality item stored in the basic quality database 92, as many quality resource databases as the number of basic quality items stored in the basic quality database 92 are constructed for the corresponding basic quality items.

For example, in the case of "national assembly member" as one of the target jobs from among the user may select, the wish schedule management server 90 constructs a basic quality database 92 related to a "national assembly member" to which basic quality items necessary for achieving the "national assembly member" job. If the basic quality database 92 related to the "national assembly member" stores three items of "educational background," "personal connections," and "local activities and public relations" as basic quality items, the wish schedule management server 90 generates quality resource databases for each of the "educational background," "personal connections," and "local activities and public relations" items, registers related resources useful for achieving the "educational background" in the quality resource database related to the "educational background," and registers related resources useful for achieving the "personal connections" in the quality resource database related to the "personal connections."

In the description above, it is assumed that as many basic quality databases 92 as the number of target jobs from among the user may select are constructed for the corresponding target jobs; however, one basic quality database 92 may also store basic quality items related to a plurality of target jobs.

On the other hand, the quality resource database may be built by constructing and analyzing big data about services, meetings, and events used or participated in for achieving a target job by many people who have worked or are working for the corresponding target job and classifying the big data into a plurality of basic quality items and storing the classified basic quality items.

Big data for services, meetings, and events that are helpful in achieving a target job may be constructed by searching and collecting, for example, SNS messages from Facebook or Twitter, blog posts of people who have worked or are working for the target job, news or webpages for the people, and the contents of memoirs or autobiographies about the people, where the collection of the information may be performed by a robot using an algorithm.

In the description above, it is assumed that as many quality resource databases as the number of basic quality items stored in the basic quality database 92 related to a specific target job are constructed for the corresponding basic quality item; however, one basic quality database 92 may also store quality resources related to a plurality of basic quality items.

To determine the highest priority basic quality to be achieved first from among basic quality items necessary for achieving a target job selected by the user, the wish schedule management server 90 classifies the user's schedule information registered in the schedule information database 11 according to the basic quality items matching the target job information entered by the user.

For example, when the target job information entered by the user is a "national assembly member" and three items of "educational background," "personal connections," and "local activities and public relations" are stored in the basic quality database related to the "national assembly member" as basic quality items, the wish schedule management server 90 classifies the user's schedule information registered in the schedule information database 11 into one of the "educational background," "personal connections," and "local activities and public relations."

The wish schedule management server 90 assigns an execution confirmation score to each schedule information the execution of which is confirmed among the user's schedule information registered in the schedule information database 11 and adds the execution confirmation score to each achievement score of the basic quality items matching the target job information.

For example, suppose the wish schedule management server 90 classifies the user's schedule information registered in the schedule information database 11 into one of the basic quality items of "educational background," "personal connections," "local activities and public relations." If the schedule information is confirmed for execution thereof, the wish schedule management server 90 assigns, to the schedule information, an execution confirmation score obtained by evaluating how much the execution of the schedule contributes to achieving the corresponding basic quality item and stores a value obtained by summing all of the execution confirmation scores of the schedule information classified as corresponding to each basic quality item as an achievement score of the basic quality item.

Meanwhile, when the wish schedule management server 90 determines the highest priority basic quality, the user's age is also considered in addition to the achievement score of each basic quality item.

Among basic quality items for a particular target job, some may be achieved regardless of the user's age, and some are practically difficult to achieve if the user's age does not belong to an appropriate range.

For example, if the target job information is "national assembly member," the basic quality item of "educational background" may correspond to an item that may be achieved relatively regardless of the user's age; however, if the target job information is a "figure skater," since basic figure skating skills should be learned approximately at the age of 6 to 9, the basic quality item of "acquisition of basic figure skating skills" may be achieved relatively when the user's age is within an appropriate range.

Therefore, if the wish schedule management server 90 considers the user's current age when determining the highest priority basic quality, and achievement of a particular basic quality item is considered to be urgent compared to other basic quality items, the wish schedule management server (90) should determine the urgent basic quality item as the highest priority basic quality when considering the user's age rather than the ranking of achievement scores of the basic quality items.

When the wish schedule management server 90 determines the highest priority basic quality, the wish schedule management server 90 extracts those related to the highest priority basic quality among the service information registered in the service database 411 and the personal schedule information registered in the personal schedule information database 91.

For example, if the target job information entered by the user is a "national assembly member," and the basic quality item of "personal connections" is determined as the highest priority basic quality, the wish schedule management server 90 extracts only those related to the basic quality item of "personal connections" among the service information registered in the service database 411 and the personal schedule information registered in the personal schedule information database 91.

The wish schedule management server 90 provides, to the user terminal 5 to which the user has logged in, recommended schedules obtained by converting schedule information of which the service provision time or schedule progress time included in the extracted service information and personal schedule information overlaps with the user's time zone without a schedule into a schedule information form.

Here, to extract again, from the service database 411 and the personal schedule information database 91, the service information or personal schedule information of which the service provision time or schedule progress time overlaps with the user's time zone without a schedule among the service information and personal schedule information extracted since being deemed to be related to the basic quality item determined to be the highest priority basic quality, the wish schedule management server 90 extracts only the service information and personal schedule information for which the user's schedule information registered in the schedule information database 11 does not exist within the service provision time of each of the extracted service information and within the schedule progress time of each of the extracted personal schedule information or for which the user's schedule information exists but a time interval between the appointment time and the end time of the registered schedule information overlaps only with part of the service provision time or schedule progress time; and provides, to the user terminal 5 to which the user has logged in, the recommended schedules obtained by converting the extracted service information and personal schedule information into a schedule information form.

When the schedule check and registration request unit 94 receives a schedule selection event in which the user selects one of the recommended schedules from at least one user terminal 5, the schedule check and registration request unit performs a function of transmitting the schedule selected by the user to the main schedule management server 10, checking a conflict with the user's schedule information registered in the schedule information database 11, and requesting the main schedule management server 10 to selectively register the selected schedule to the schedule information database 11 as the user's schedule information.

The main schedule management server 10 transmits a schedule registration confirmation signal to the user terminal 5 and the wish schedule management server 90 after schedule registration or a schedule conflict signal to the user terminal 5 and the wish schedule management server 90 according to a result of processing a request from the schedule check and registration request unit 94 of the wish schedule management server 90 by the schedule check and registration unit 14.

In other words, the schedule check and registration unit 14 compares a time interval between the end time of an immediately preceding schedule and an appointment time of a selected schedule (first time interval) with a first required movement time and compares a time interval between the end time of the selected schedule and an appointment time of an immediately subsequent schedule (second time interval) with a second required movement time; if the selected schedule conflicts with the immediately preceding schedule or the immediately subsequent schedule, the main schedule management server 10 transmits a schedule conflict signal to the user terminal 5 to which the user has logged in and the wish schedule management server 90.

Meanwhile, if the wish schedule management server 90 receives a schedule conflict signal from the main schedule management server 10, the wish schedule management server 90 again provides the recommended schedules except for the selected schedule to the user terminal 5 to which the user has logged in.

Although the descriptions above assume that the main schedule management server 10 transmits a schedule conflict signal to the user terminal 5 to which the user has logged in and the wish schedule management server 90, when a selected schedule conflicts with an immediately preceding schedule or an immediately subsequent schedule, the main schedule management server 10 may transmit a schedule conflict signal to the wish schedule management server 90, and the wish schedule management server 90 may provide the recommended schedules except for the selected schedule to the user terminal 5 to which the user has logged in together with a schedule conflict signal.

The wish schedule management server 90 extracts meeting schedule information from among recommended schedules, classifies meeting schedule information corresponding to the same meeting among the extracted meeting schedule information according to the respective meetings. When schedule progress time of each set of meeting schedule information classified as being related to the same meeting overlaps with each other, the sets of meeting schedule information may be sequentially displayed on the at least one user terminal 5 according to a sum of importance scores of participants in each meeting.

When the wish schedule management server 90 provides recommended schedules, which is related to the highest priority basic quality, of which the service provision time or schedule progress time overlaps with the user's time zone without a schedule to the user terminal 5 to which the user has logged in, some recommended schedules may have personal schedule information open to the user by different leaders, which, however, actually corresponds to the same meeting schedule information while, for some recommended schedules, schedule progress time of each set of personal schedule information corresponding to different meeting schedule information may overlap with each other.

For example, suppose meeting schedule information a, b, c, d, e corresponding to a congratulatory event meeting schedule or a social gathering schedule exists among recommended schedules. In this case, a, b may be personal schedule information open to the user by different leaders, which is, in fact, meeting schedule information for the same meeting 1. The meeting schedule information c, d, e may also be personal schedule information open to the user by different leaders, which is, in fact, meeting schedule information about the same meeting 2. The schedule progress time of the set consisting of meeting schedule information classified as meeting 1 (a, b) may overlap with the schedule progress time of the set consisting of meeting schedule information classified as meeting 2 (c, d, e).

In other words, when the wish schedule management server 90 transmits, to the user terminal 5 to which the user has logged in, recommended schedules related to the highest priority basic quality and obtained by converting service information and personal schedule information of which the service provision time or schedule progress time overlaps with the user's time zone without a schedule into a schedule information form, the recommended schedules may include a plurality of meeting schedule information, and as a result of classifying the meeting schedule information included in the recommended schedules according to the same meetings, schedule progress time of each set of meeting schedule information classified as being related to the same meeting may overlap with each other. In this case, there is a need to determine which meeting is more beneficial to attend and display a determination result sequentially on the user terminal 5 to which the user has logged in.

To this end, the wish schedule management server 90 assigns an importance score to each leader who has opened personal schedule information registered in the personal schedule information database 91.

The importance score may be determined by considering various evaluation factors such as public recognition of the leader, professional career in a business domain in which the leader is involved, degree of social influence of the leader, and intimacy with the user.

Then, the wish schedule management server 90 extracts meeting schedule information from among the recommended schedules, classifies meeting schedule information corresponding to the same meeting from among the extracted meeting schedule information according to the respective meetings, and figures out the leaders participating in the respective meetings by determining the leaders who have opened meeting schedule information corresponding to the respective meetings.

For example, some recommended schedules may have personal schedule information open to the user by different leaders but, in fact, corresponds to the same meeting schedule information.

This may be interpreted such that different leaders supposed to attend the same meeting have opened their schedule information related to the respective meetings to the user as personal schedule information.

Therefore, in this case, if meeting schedule information among the recommended schedules is classified according to the same meetings and leaders who have opened their meeting schedule information corresponding to the respective meetings are identified, participating leaders may be determined for each meeting.

If leaders attending each meeting are identified, the wish schedule management server 90 may sum the importance scores of the participating persons (leaders) for each meeting and display sets of meeting schedule information sequentially in order of sum of importance scores of the respective meetings on the user terminal 5 to which the user has logged in.

In other words, the larger the sum of importance scores of participating people (leaders) in each meeting, it is determined to be more beneficial for the user to attend the meeting, and the meeting schedule information is made to be displayed preferentially on the user terminal 5 to which the user has logged in.

Accordingly, the user confirms in order of sum of importance scores of participating people (leaders) in each meeting, selects one of the sets (recommended schedules) of meeting schedule information displayed on the user terminal 5, and makes the selected schedule selectively registered to the schedule information database 11 as the user's schedule information.

According to various embodiments of the present disclosure, a schedule management service method of a schedule management service system, wherein the schedule management service system comprises a main schedule management service system receiving movement method information and schedule information of a user from at least one user terminal, registering the received information to a schedule information database and managing the registered information, and transmitting alarm information and registered schedule information to the at least one user terminal according to a predetermined rule, wherein the main schedule management server comprises a member management unit receiving user's information from the at least one user terminal, registering the received information to a member information database and managing the registered information, and performing user member authentication according to a login request; a movement time calculation unit calculating required movement time between schedules by using the movement method information, appointment time information and appointment place information included in the schedule information received from the at least one user terminal, and appointment time information and appointment place information included in the user's schedule information registered to the schedule information database; and a schedule check and registration unit checking a conflict with the user's schedule information registered to the schedule information database at the time of schedule registration and registering the input schedule information selectively to the schedule information database, the method comprising receiving user's information from the at least one user terminal, registering the received information to a member information database and managing the registered information, and performing user member authentication according to a login request; calculating required movement time between schedules by using the movement method information, appointment time information and appointment place information included in the schedule information received from the at least one user terminal, and appointment time information and appointment place information included in the user's schedule information registered to the schedule information database; and checking a conflict with the user's schedule information registered to the schedule information database and transmitting a schedule registration confirmation signal to the at least one user terminal after registering the input scheduling information to the schedule information database or a schedule conflict signal to the at least one user terminal.

A schedule management service system and method according to the present disclosure provides an advantageous effect of determining whether scheduled events may be kept up with by using movement method information input from a user terminal, appointment time information and appointment place information included in the input schedule information, and an immediately preceding schedule and an immediately subsequent schedule of the user registered in a schedule information database; and transmitting a schedule conflict signal to the user terminal if the scheduled events may not be kept up with.

Also, the schedule management service system and method according to the present disclosure provides an advantageous effect of selectively registering the shared schedule information of a community to which the user belongs to the schedule information database as the user's schedule information and sharing a common schedule determined from automatic implementation of scheduling of meetings in the community.

Also, the schedule management service system and method according to the present disclosure provides an advantageous effect of receiving work conditions from the user terminal, converting job information that satisfies the conditions into a schedule information format and providing the converted job information to the user terminal, and selectively registering a schedule selected by the user as the user's schedule information in the schedule information database.

Also, the schedule management service system and method according to the present disclosure provides an advantageous effect of receiving condition information of an interested service from the user terminal, converting service information that satisfies the condition into a schedule information format and providing the converted service information to the user terminal, and selectively registering a schedule selected by the user as the user's schedule information in the schedule information database.

Also, the schedule management service system and method according to the present disclosure provides an advantageous effect of registering and managing each of the followers who wish to share a leader's schedule information as one of active supporters, friendly supporters, critical supporters, and criticizers and sharing the leader's schedule information among the followers or all users who are not followers of the leader according to the public attribute given to the schedule information by the leader.

Also, the schedule management service system and method according to the present disclosure provides an advantageous effect of accessing a basic quality database matching target job information input from the user terminal, obtaining basic qualities needed for achieving the target job, determining the highest priority basic quality to be achieved in consideration of the user's age, extracting those related to the highest priority basic quality among service information registered to a service database and personal schedule information registered to a personal schedule information database, and providing, to the user terminal, recommended schedules obtained by converting service information and personal schedule information of which the service provision time or the schedule progress time included in the extracted service information and personal schedule information overlaps with the user's time zone without a schedule into a schedule information format.

The present disclosure has been described with reference to specific constituting elements and a limited number of embodiments and drawings, which has been intended only to help overall understanding of the present disclosure. Therefore, the present disclosure is not limited to the specific embodiments, and various changes and modifications are possible from the disclosure by those skilled in the art to which the present disclosure belongs.

Therefore, the technical scope of the present disclosure should not be confined to that provided by the embodiments, and it should be noted that not only the appended claims but also all of those equivalent to the appended claims or modifications which may be regarded as being equal thereto belong to the technical scope of the present disclosure.

**[Detailed Description of Main Elements]**

| | |
|---|---|
| 1: Schedule management service system | |
| 5: User terminal | 7: Requester terminal |
| 10: Main schedule management server | 11: Schedule information database |
| 12: Member management unit | 121: Member information database |
| 13: Movement time calculation unit | 14: Schedule check and registration unit |
| 20: Group schedule management server | |
| 21: Group information database | 22: SNS server |
| 221: Attendance group database | 222: Scheduler server |
| 30: Work schedule management server | |
| 31: Job information reception and registration unit | 311: Job position database |
| 32: Work condition reception and management unit | 33: First matching schedule recommendation unit |
| 34: Schedule check and registration request unit | |
| 40: Service schedule management server | |
| 41: Service information collection and registration unit | 411: Service database |
| 42: Service-of-interest condition reception and management unit | |
| 43: Second matching schedule recommendation unit | 44: Schedule check and registration request unit |
| 50: Open schedule management server | |
| 60: Person-of-interest management server | |
| 70: Event schedule recommendation server | |
| 80: AI server | |
| 90: Wish schedule management server | 91: Personal schedule information database |
| 92: Basic quality database | 94: Schedule check and registration request unit |

### INDUSTRIAL AVAILABILITY

The present disclosure relates to a schedule management service system and a method which takes spatial movements into consideration and has a schedule recommendation function. Based on the movement method information input from a user terminal, appointment time information and appointment place information included in input schedule information, and the user's immediately preceding schedule and immediately subsequent schedule registered in a schedule information database, the schedule management service system and the method according to the present disclosure may determine whether it is possible to move between schedules and if not possible, transmits a schedule conflict signal to the user terminal, which may be used for applications such as schedule management services.

## Claims

1. A schedule management service system 1 comprising:
a main schedule management server 10 receiving movement method information and schedule information of a user from at least one user terminal 5, registering the received information to a schedule information database 11 and managing the registered information, and transmitting alarm information and registered schedule information to the at least one user terminal 5 according to a predetermined rule; and
a work schedule management server 30 receiving job information from at least one requester terminal 7, registering and managing the received job information by classifying the received job information according to categories, search words, areas, work execution times, and salaries, converting the job information satisfying conditions due to a request from the at least one user terminal 5 into a schedule information form, and providing the converted job information to the at least one user terminal 5,
wherein the main schedule management server 10 comprises:
a member management unit receiving user's information from the at least one user terminal 5, registering the received information to a member information database 121 and managing the registered information, and performing user member authentication according to a login request;
a movement time calculation unit 13 calculating required movement time between schedules by using the movement method information, appointment time information and appointment place information included in the schedule information received from the at least one user terminal 5, and appointment time information and appointment place information included in the user's schedule information registered to the schedule information database 11; and
a schedule check and registration unit 14 checking a conflict with the user's schedule information registered to the schedule information database 11 at the time of schedule registration and registering the schedule information received from the at least one user terminal 5 selectively to the schedule information database 11; and
wherein the main schedule management server 10 transmits a schedule registration confirmation signal to the at least one user terminal 5 after schedule registration or a schedule conflict signal to the at least one user terminal 5 according to a processing result from the schedule check and registration unit 14,
wherein the work schedule management server 30 comprises:
a job information reception and registration unit 31 receiving job information including work execution place information, work execution time information, and salary information from the at least one requester terminal 7; registering the received job information to a job position database 311 by classifying the received job information according to categories, search words, areas, work execution times, and salaries; and supporting and managing searching, viewing, modifying, and deleting job information by a requester who has entered the job information;
a work condition reception and management unit 32 receiving work conditions including information on type of job position of interest, information on a work area, and information on a work time zone from the at least one user terminal 5 and storing and managing the received work conditions;
a first matching schedule recommendation unit 33 extracting job information which satisfies the work conditions from the job position database 311 and the work execution time of which does not overlap the user's time zone with a schedule and providing, to the at least one user terminal 5, matching schedules obtained by converting the extracted job information to a schedule information form; and
a schedule check and registration request unit 34, when a schedule selection event for selecting one of the matching schedules by the user is received from the at least one user terminal 5, transmitting the schedule selected by the user to the main schedule management server 10, checking a conflict with the user's schedule information registered to the schedule information database 11, and requesting the main schedule management server 10 to selectively register the selected schedule to the schedule information database 11 as the user's schedule information;
wherein the main schedule management server 10 transmits a schedule conflict signal to the work schedule management server 30 when the selected schedule conflicts with an immediately preceding schedule or an immediately subsequent schedule as a result of processing a request from the schedule check and registration request unit 34, and
the work schedule management server 30 transmits, to the at least one user terminal 5, the matching schedules except for the selected schedule when the schedule conflict signal is received from the main schedule management server 10.

2. The system of claim 1, wherein a user designates the movement method information by selecting one from among a car, public transportation, a bicycle, and walking for each period, or the main schedule management server 10 provides a default value to set the movement method information.

3. The system of claim 1, wherein the movement time calculation unit 13 extracts an immediately preceding schedule and an immediately subsequent schedule from the schedule information database 11 based on the appointment time information included in the schedule information received from the at least one user terminal 5,
converts appointment place information included in the schedule information received from the at least one user terminal 5, appointment place information of the immediately preceding event, and appointment place information of the immediately subsequent schedule into coordinate data on an electronic map, and
inputs the converted coordinate data on the electronic map into an electronic map engine together with the movement method information, calculates a first required movement time required to move between the appointment place of the immediately preceding schedule and the appointment place included in the schedule information received from the at least one user terminal 5 and a second required movement time required between the appointment place included in the schedule information received from the at least one user terminal 5 and the appointment place of the immediately subsequent schedule; and
the schedule check and registration unit 14, at the time of schedule registration, compares a time interval between the end time of the immediately preceding schedule and the appointment time of the input schedule information with the first required movement time, compares a time interval between the end time of the schedule information received from the at least one user terminal 5 and the appointment time of the immediately subsequent schedule with the second required movement time, and selectively registers the schedule information received from the at least one user terminal 5 to the schedule information database 11 according to whether a conflict occurs.

4. The system of claim 1, further comprising a group schedule management server 20 receiving user identification information from the at least one user terminal 5, transmitting shared schedule information of a group to which the user is subscribed to the main schedule management server 10, checking whether the shared schedule information of the subscribed group conflicts with the user's schedule information registered in the schedule information database 11, and requesting the main schedule management server 10 to selectively register the shared schedule information of the subscribed group to the schedule information database 11 as the user's schedule information,
wherein the group schedule management server 20 comprises
a group information database 21 in which member information for a plurality of groups and shared schedule information for each group are stored and managed, and
an SNS server 22 providing a social networking service to members of each group based on the group member information stored in the group information database 21; and
wherein the group schedule management server 20 receives, from the main schedule management server 10, schedule information to which the user has assigned a group-open attribute among the user's schedule information registered to the schedule information database 11 and opens the received schedule information to each member of the subscribed group as personal schedule information.

5. The system of claim 4, wherein the SNS server 22 comprises:
an attendance group database 221 registering each member for one of an mandatory attendance group, an optional attendance group, and an unrelated attendance group based on the member information of the group; and
a scheduler server 222 giving priorities to the attendance groups in order of the mandatory attendance group, the optional attendance group, and the unrelated attendance group, determining whether the number of members who have decided to attend a meeting satisfies a predetermined condition for each attendance group according to the priority, and if the predetermined condition is satisfied, determining a meeting schedule by setting the date selected by the largest number of members among a plurality of meeting dates notified to the members of the group as a meeting date,
wherein the scheduler server 222:
determines whether the number of members who have decided to attend a meeting among the group members registered in the mandatory attendance group is greater than or equal to the number of votes,
when a condition for the number of votes is satisfied, determines whether a sum of the number of members who have decided to attend the meeting among the group members registered in the mandatory attendance group and the number of members who have decided to attend the meeting among the group members registered in the optional attendance group is greater than or equal to the quorum,
when the sum is greater than or equal to the quorum, determines whether the number of members who have decided to attend the meeting among the group members registered in the unrelated attendance group is greater than or equal to the number of optional members, and
when the number of votes, quorum, and the number of optional members required are all satisfied, determines a meeting schedule by setting the date selected by the largest number of members among a plurality of meeting dates notified to the group members as a meeting date; and
when the scheduler server 222 determines a meeting schedule, the group information database 21 stores the meeting schedule as shared schedule information of the group.

6. The system of claim 1, wherein the job information reception and registration unit 31 determines whether job information including work execution place information, work execution time information, and salary information provided when requested for registration of job information from the at least one requester terminal 7 satisfies predetermined basic conditions and registers the job information to the job position database 311 only when the basic conditions are satisfied.

7. The system of claim 1, wherein the work area information included in the work conditions is selected and specified for each period by the user or set by the work condition reception and management unit 32 as work area information including appointment places of schedule information during a work period specified by the user among the user's schedule information registered in the schedule information database 11, and
the work area information is designated or set in units of specific administrative regions,
wherein, when extracting job information that satisfies the work condition from the job position database 311, the first matching schedule recommendation unit 33 extracts job information,
the category of which corresponds to the information on the type of job position of interest,
the work execution place of which is included in an administrative region unit designated or set as the work area information, and
the work execution time of which is matched to the work time zone information and does not overlap with the corresponding user's time zone with a schedule; and
provides matching schedules obtained by converting the extracted job information into a schedule information form to the at least one user terminal 5.

8. The system of claim 1, wherein one of a plurality of administrative region units is selected and designated by the user for each period as the work area information included in the work conditions;
for each of the plurality of administrative region units, specific location information is designated as a reference location by the user or set as a reference location by the work condition reception and management unit 32; and
particular distance information is designated or set as a limiting distance,
wherein, when extracting job information that satisfies the work condition from the job position database 311, the first matching schedule recommendation unit 33 extracts job information,
the category of which corresponds to the information on the type of job position of interest,
wherein a distance between a work execution place included in the job information and the reference location in an administrative region unit designated as the work area information is within the limiting distance of the administrative region unit designated as the work area information,
the work execution time of which is matched to the work time zone information and does not overlap with the corresponding user's time zone with a schedule; and
provides matching schedules obtained by converting the extracted job information into a schedule information form to the at least one user terminal 5.

9. The system of claim 1, wherein, if a schedule selection event in which a user selects one of the matching schedules is received from the at least one user terminal 5 and the schedule registration confirmation signal is received from the main schedule management server 10, the work schedule management server 30 extracts the user's information from the member information database 121, transmits the user's information and the received schedule selection event to a requester terminal 7 which has entered the corresponding job information, maps the received schedule selection event to the corresponding job information, and stores the mapped job information to the job position database 311 to update the corresponding job information.

10. A schedule management service system 1 comprising:
a main schedule management server 10 receiving movement method information and schedule information of a user from at least one user terminal 5, registering the received information to a schedule information database 11 and managing the registered information, and transmitting alarm information and registered schedule information to the at least one user terminal 5 according to a predetermined rule; and
a service-of-interest schedule management server 40 receiving service information from the Internet, registering and managing the received service information by classifying the received service information according to categories, search words, areas, service provision times, and cost, converting the service information satisfying conditions due to a request from the at least one user terminal 5 into a schedule information form, and providing the converted service information to the at least one user terminal 5,
wherein the main schedule management server 10 comprises:
a member management unit 12 receiving user's information from the at least one user terminal 5, registering the received information to a member information database 121 and managing the registered information, and performing user member authentication according to a login request;
a movement time calculation unit 13 calculating required movement time between schedules by using the movement method information, appointment time information and appointment place information included in the schedule information received from the at least one user terminal 5, and appointment time information and appointment place information included in the user's schedule information registered to the schedule information database 11; and
a schedule check and registration unit 14 checking a conflict with the user's schedule information registered to the schedule information database 11 at the time of schedule registration and registering the schedule information received from the at least one user terminal 5 selectively to the schedule information database 11; and
wherein the main schedule management server 10 transmits a schedule registration confirmation signal to the at least one user terminal 5 after schedule registration or a schedule conflict signal to the at least one user terminal 5 according to a processing result from the schedule check and registration unit 14, and
wherein the service-of-interest schedule management server 40 comprises:
a service information collection and management unit 41 collecting service information including service provision place information and service provision time information from the Internet, classifying the collected service information according to categories, search words, areas, service provision times, and cost, and registering the classified service information to a service database 411, and managing the registered service information;
a service-of-interest condition reception and management unit 42 receiving conditions for a service of interest including information on the type of service of interest and service use time zone information from the at least one user terminal 5 and storing and managing the received service conditions; and
a second matching schedule recommendation unit 43 extracting service information, which satisfies the conditions for a service of interest and the service provision time of which overlaps with the service use time zone information and the user's time zone without a schedule, and providing matching schedules obtained by converting the extracted service information to a schedule information form to the at least one user terminal 5; and
a schedule check and registration request unit 44, when a schedule selection event for selecting one of the matching schedules by the user is received from the at least one user terminal 5, transmitting the schedule selected by the user to the main schedule management server 10, checking a conflict with the user's schedule information registered to the schedule information database 11, and requesting the main schedule management server 10 to selectively register the selected schedule to the schedule information database 11 as the user's schedule information; and
wherein the main schedule management server 10 transmits a schedule conflict signal to the service-of-interest schedule management server 40 when the selected schedule conflicts with an immediately preceding schedule or an immediately subsequent schedule as a result of processing a request from the schedule check and registration request unit 44, and
when the schedule conflict signal is received from the main schedule management server 10, the service-of-interest schedule management server transmits the received schedule conflict signal to the user terminal 5 and provides the matching schedules except for the selected schedule to the at least one user terminal 5.

11. The system of claim 10, wherein an administrative region unit among a plurality of administrative region units, which includes appointment places of schedule information during a service use period specified by the user from among the user's schedule information registered in the schedule information database 11 or which includes an appointment place of an immediately preceding schedule temporally close to the start time of the service use period and an appointment place of an immediately subsequent schedule temporally close to the end time of the service use period, is set as service use area information by the service-of-interest condition reception and management unit 42;
for each of the plurality of administrative region units, specific location information is designated as a reference location by the user or set as a reference location by the service-of-interest condition reception and management unit 42, and particular distance information is designated or set as a limiting distance; and
when service information satisfying the conditions for a service of interest are extracted from the service database 411, the second matching schedule recommendation unit 43 extracts service information, the category of which corresponds to the information on the type of service of interest,
the service provision place of which is located within a limiting distance of the administrative region unit designated or set as the service use area information from a reference location of the administrative region unit designated or set as the service use area information,
the service provision time of which overlaps with the service use time zone information and the user's time zone without a schedule, and
provides matching schedules obtained by converting the extracted service information into a schedule information form to the at least one user terminal 5.

12. The system of claim 11, wherein the second matching schedule recommendation unit 43 sequentially displays matching schedules obtained by converting extracted service information into a schedule information form on the at least one user terminal 5 according to a sum of values obtained by multiplying each of the reciprocal of the number of views ranking of the service information and the reciprocal of the user's recommendation ranking of the service information by a predetermined weight.

13. A schedule management service system 1 comprising:
a main schedule management server 10 receiving movement method information and schedule information of a user from at least one user terminal 5, registering the received information to a schedule information database 11 and managing the registered information, and transmitting alarm information and registered schedule information to the at least one user terminal 5 according to a predetermined rule; and
an open schedule management server 50;
wherein the main schedule management server 10 comprises:
a member management unit 12 receiving user's information from the at least one user terminal 5, registering the received information to a member information database 121 and managing the registered information, and performing user member authentication according to a login request;
a movement time calculation unit 13 calculating required movement time between schedules by using the movement method information, appointment time information and appointment place information included in the schedule information received from the at least one user terminal 5, and appointment time information and appointment place information included in the user's schedule information registered to the schedule information database 11; and
a schedule check and registration unit 14 checking a conflict with the user's schedule information registered to the schedule information database 11 at the time of schedule registration and registering the schedule information received from the at least one user terminal 5 selectively to the schedule information database 11; and
wherein the main schedule management server 10 transmits a schedule registration confirmation signal to the at least one user terminal 5 after schedule registration or a schedule conflict signal to the at least one user terminal 5 according to a processing result from the schedule check and registration unit 14,
wherein the open schedule management server 50 registers and manages each of the followers who wish to share the schedule information of a leader, who is a specific user, as one of active supporters, friendly supporters, critical supporters, and criticizers; and
from among the leader's schedule information registered in the schedule information database 11,
shares schedule information to which the leader has given an active supporter open attribute as personal schedule information with those users registered as an active supporter among the followers,
shares schedule information to which the leader has given a friendly supporter open attribute as personal schedule information with those users registered as an active and friendly supporters among the followers,
shares schedule information to which the leader has given a critical supporter open attribute as personal schedule information with those users registered as an active, friendly, and critical supporters among the followers, and
shares schedule information to which the leader has given an all-open attribute as personal schedule information with the followers except for those users registered as a criticizer and all of the users who are not a follower of the leader.

14. The system of claim 13, wherein the open schedule management server 50 registers and manages each of the followers who want to share location information of a leader, who is a specific user, as one of an approach notification target and an approach notification non-target, and
obtains location information received from GPS satellites by the leader's user terminal 5 and provides current location information of the leader to user terminals 5 of the users registered as an approach notification target among the followers,
and the user terminal 5 receiving current location information of the leader outputs an approach notification when distance between the leader's current location and location of a user terminal 5 receiving the leader's current location information is within a limiting distance specified by a follower who has logged in to the user terminal 5 receiving the leader's current location information, specified by the leader, or set by the open schedule management server 50.

15. The system of claim 13, wherein the leader is a product sales person or a service provider, and
the leader's schedule information is sale or event schedule information of the product sales person or the service provider.

16. The system of claim 13, further comprising a person-of-interest management server 60 receiving person-of-interest information of a logged-in user from the at least one user terminal 5, storing and managing the received person-of-interest information, and requesting the open schedule management server 50 to register the logged-in user as a follower supposed to receive schedule information of the users matching the received person-of-interest information.

17. The system of claim 13 or 15, further comprising an event schedule recommendation server 70 extracting sale, event, or performance schedule information from among the personal schedule information open to a logged-in user according to a request of the at least one user terminal 5; and providing recommended schedules, which are personal schedule information such that an event time included in the extracted event schedule information overlaps with the user's time zone without a schedule, to the at least one user terminal 5.

18. The system of claim 17, wherein the event schedule recommendation server 70 includes a schedule check and registration request unit transmitting a schedule selected by a user to the main schedule management server 10 when a schedule selection event in which the user selects one of the recommended schedules is received from the at least one user terminal 5, checking a conflict with the user's schedule information registered in the schedule information database 11, and requesting the main schedule management server 10 to selectively register the selected schedule to the schedule information database 11 as the user's schedule information;
wherein the main schedule management server 10 transmits a schedule conflict signal to the event schedule recommendation server 70 when the selected schedule conflicts with an immediately preceding schedule or an immediately subsequent schedule as a result of processing a request from the schedule check and registration request unit, and
when the schedule conflict signal is received from the main schedule management server 10, the event schedule recommendation server 70 transmits the received schedule conflict signal to the user terminal 5 and provides the recommended schedules except for the selected schedule to the at least one user terminal 5.

19. The system of claim 17, further comprising an AI server 80 analyzing schedule information of a logged-in user registered in the schedule information database 11 and predicting the user's location during the user's time zone without a schedule according to a request of the event schedule recommendation server 70;
wherein the event schedule recommendation server 70, among schedule information in which the event time overlaps with the user's time zone without a schedule, provides recommended schedules, which are schedule information such that distance between an event place of schedule information and the user's location predicted by the AI server 80 is within a limiting distance specified by the user or set by the event schedule recommendation server 70, to the at least one user terminal 5.

20. The system of claim 13, further comprising:
a service schedule management server 40 collecting service information including service provision place information and service provision time information from the Internet; classifying the collected service information according to categories, search words, areas, service provision times, and cost; and registering the classified service information to a service database 411; and managing the registered service information; and
a wish schedule management server 90 receiving, storing, and managing target job information of a logged-in user from the at least one user terminal 5; collecting personal schedule information open to the logged-in user; registering the collected personal schedule information to a personal schedule information database 91; managing the registered personal schedule information; accessing a basic quality database 92 matching the target job information among a plurality of basic quality databases 92, retrieving basic qualities needed for achieving a target job, determining the highest priority basic quality to be achieved in consideration of the user's age; extracting those related to the highest priority basic quality among service information registered to the service database 411 and personal schedule information registered to the personal schedule information database 91; and providing, to the at least one user terminal 5, recommended schedules obtained by converting service information and personal schedule information of which the service provision time or the schedule progress time included in the extracted service information and personal schedule information overlaps with the user's time zone without a schedule into a schedule information format.

21. The system of claim 20, wherein the wish schedule management server 90 includes a schedule check and registration request unit 94 transmitting a schedule selected by a user to the main schedule management server 10 when a schedule selection event in which the user selects one of the recommended schedules is received from the at least one user terminal 5, checking a conflict with the user's schedule information registered in the schedule information database 11, and requesting the main schedule management server 10 to selectively register the selected schedule to the schedule information database 11 as the user's schedule information;
wherein the main schedule management server 10 transmits a schedule conflict signal to the wish schedule management server 90 when the selected schedule conflicts with an immediately preceding schedule or an immediately subsequent schedule as a result of processing a request from the schedule check and registration request unit 94, and
when the schedule conflict signal is received from the main schedule management server 10, the wish schedule management server 90 transmits the received schedule conflict signal to the user terminal 5 and provides the recommended schedules except for the selected schedule to the at least one user terminal 5.

22. The system of claim 20, wherein the wish schedule management server 90 classifies the user's schedule information registered in the schedule information database 11 according to basic quality items matching the target job information,
assigns an execution confirmation score to each schedule information the execution of which is confirmed among the user's schedule information registered in the schedule information database 11 and adds the execution confirmation score to each achievement score of the basic quality items matching the target job information, and
determines the highest priority basic quality in consideration of the user's age and the achievement score of each basic quality item.

23. The system of claim 20, wherein the wish schedule management server 90 assigns an importance score to each leader who has opened personal schedule information registered in the personal schedule information database 91,
extracts meeting schedule information from among the recommended schedules, classifies meeting schedule information corresponding to the same meeting among the extracted meeting schedule information according to the respective meetings,
identifies leaders who have opened their meeting schedule information corresponding to the respective meetings and determines leaders participating in each meeting, and
when schedule progress time of each set of meeting schedule information classified as being related to the same meeting overlaps with each other, displays the sets of meeting schedule information sequentially on the at least one user terminal 5 according to a sum of importance scores of participants in each meeting.
